(19) Europäisches Patentamt / European Patent Office / Office européen des brevets

(11) **EP 4 355 024 B1**

(12) **EUROPEAN PATENT SPECIFICATION**

(45) Date of publication and mention
of the grant of the patent:
**31.12.2025  Bulletin 2026/01**

(21) Application number: **22852092.0**

(22) Date of filing: **30.07.2022**

(51) International Patent Classification (IPC):
*H04W 88/08* $^{(2009.01)}$   *H04W 4/14* $^{(2009.01)}$
*H04L 1/16* $^{(2023.01)}$   *H04B 7/185* $^{(2006.01)}$
*H04L 1/1607* $^{(2023.01)}$   *H04L 1/1867* $^{(2023.01)}$
*H04L 69/22* $^{(2022.01)}$   *H04L 69/321* $^{(2022.01)}$
*H04L 69/324* $^{(2022.01)}$   *H04L 69/323* $^{(2022.01)}$

(52) Cooperative Patent Classification (CPC):
**H04B 7/18513; H04L 1/16; H04L 1/1607;
H04L 1/1867; H04L 69/321; H04L 69/323;
H04L 69/324; H04W 4/14;** H04L 69/22

(86) International application number:
**PCT/CN2022/109288**

(87) International publication number:
**WO 2023/011379 (09.02.2023 Gazette 2023/06)**

(54) **INBOUND TRANSMISSION CONTROL METHOD AND RELATED APPARATUS IN SATELLITE COMMUNICATION SYSTEM**

VERFAHREN UND ZUGEHÖRIGE VORRICHTUNG ZUR STEUERUNG VON EINGEHENDER ÜBERTRAGUNG IN EINEM SATELLIT-KOMMUNIKATIONSSYSTEM

PROCÉDÉ ET APPAREIL ASSOCIÉ DE COMMANDE DE TRANSMISSION ENTRANTE DANS UN SYSTÈME DE COMMUNICATION SATELLITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.07.2021  CN 202110877287**

(43) Date of publication of application:
**17.04.2024  Bulletin 2024/16**

(73) Proprietor: **Huawei Technologies Co., Ltd.
Shenzhen, Guangdong 518129 (CN)**

(72) Inventors:
• **ZHU, Xudong
Shenzhen, Guangdong 518129 (CN)**
• **QIAN, Feng
Shenzhen, Guangdong 518129 (CN)**
• **GAN, Wenyu
Shenzhen, Guangdong 518129 (CN)**
• **YAO, Zhendong
Shenzhen, Guangdong 518129 (CN)**
• **WANG, Bao
Shenzhen, Guangdong 518129 (CN)**
• **YAO, Chuting
Shenzhen, Guangdong 518129 (CN)**

(74) Representative: **Gill Jennings & Every LLP
The Broadgate Tower
20 Primrose Street
London EC2A 2ES (GB)**

(56) References cited:
EP-B1- 2 693 831        CN-A- 1 842 052
CN-A- 103 152 709     CN-A- 103 200 548
CN-A- 107 623 955     CN-A- 111 211 879
US-A1- 2017 118 608

## Description

This application claims priority to Chinese Patent Application No. 202110877287.6, filed with the China National Intellectual Property Administration on July 31, 2021 and entitled "INBOUND TRANSMISSION CONTROL METHOD IN BEIDOU COMMUNICATION SYSTEM, SYSTEM, AND RELATED APPARATUS".

## TECHNICAL FIELD

This application relates to the field of satellite communication, and in particular, to an inbound transmission control method in a BeiDou communication system, a system, and a related apparatus.

## BACKGROUND

A BeiDou satellite navigation system is an important infrastructure that integrates positioning, timing, and communication. A BeiDou short packet communication service is one of the features that enable the BeiDou satellite navigation system to be different from other global positioning and navigation systems such as a global positioning system (global positioning system, GPS) and a global navigation satellite system (global navigation satellite system, GLONASS), and is especially applicable to positioning and communication in areas that mobile communication does not cover or cannot cover, or in which the communication system is damaged, such as the ocean, desert, grassland, and no man's land. The communication system of the BeiDou short packet service upgrades a technical system, and opens some necessary resources of the communication system of the BeiDou short packet service to civil use. For civil services and device features, a communication protocol needs to be designed based on the features of the communication system of the BeiDou short packet service.

Because the communication system of the BeiDou short packet service performs communication through a satellite link, main features of the communication system of the BeiDou short packet service are: 1. Long delay. 2. Large link loss. 3. Supported services are mainly burst short message services. 4. Link status management, mobility management, broadcast control information, and the like are not supported. A current wireless communication protocol is not applicable to the communication system of the BeiDou short packet service, because a satellite communication propagation distance is long and the communication system of the BeiDou short packet service has a high requirement on a transmit power of a terminal. Due to a limitation of a radio frequency component of a current civil terminal (for example, a mobile phone), the terminal cannot continuously send signals to a BeiDou short packet satellite for long time. To avoid damaging the radio frequency component on the terminal as much as possible, after the radio frequency component of the terminal keeps working in a transmitting state for a period of time, the radio frequency component of the terminal needs to be disabled and stopped for a period of time before continuing to switch to the transmitting state. However, in an existing wireless communication protocol, a signaling interaction procedure is executed in the BeiDou short packet service. This takes long time. Air interface resources in the communication system of the BeiDou short packet service are limited, and such signaling interaction cannot be met. Therefore, no control signaling interaction protocol procedure is specially designed. In addition, there is no broadcast information in communication of the BeiDou short packet service, and the terminal cannot obtain configuration information of a BeiDou network device by using broadcast information. Therefore, when a data packet sent by the terminal is lost, the terminal cannot notify, by using dedicated control signaling or broadcast information, the BeiDou network device to negotiate retransmission of the data packet, and a normal data transmission process cannot be ensured.

CN 111 211 879 A relates to a Beidou message transmission method and an airborne Beidou system. EP 2 693 831 B1 relates to the field of wireless communication, especially relates to a wireless communication method, a transmitting device and a receiving device.

## SUMMARY

The invention is defined by an inbound transmission control method in a satellite communication system according to claim 1, a communication apparatus according to claim 13, a storage medium according to claim 14, and a chip according to claim 15 to ensure normal execution of a data transmission process when a data packet of a terminal is lost in the BeiDou communication system.

According to a first aspect, this application provides an inbound transmission control method.

According to the inbound transmission control method in the BeiDou communication system provided in this application, the terminal may segment an application layer packet into a plurality of MDCP PDUs at an MDCP layer. The terminal may sequentially deliver the MDCP PDUs to an SLC layer as an SLC SDU at the SLC layer, and segment the SLC SDU into N SLC PDUs at the SLC layer. Frame header information includes a SAI field, a total frame quantity field, and a frame sequence number field. The SAI field may indicate whether the SLC PDU belongs to an SLC SDU that is not sent.

The total frame quantity field may indicate a total quantity of SLC PDUs included in the SLC SDU to which the SLC PDU belongs. The frame sequence number field may indicate a sequence number of the SLC PDU in the SLC SDU to which the SLC PDU belongs. The terminal may send the N SLC PDUs in the first SLC PDU to the BeiDou network device. If the BeiDou network device determines, based on frame header information of a received SLC PDU, that an SLC PDU in the first SLC SDU is missing, the BeiDou network device returns the first ACK to the terminal. The first ACK indicates a frame sequence number of an SLC PDU that is in the first SLC SDU and that is not received by the BeiDou network device. After receiving the first ACK from the BeiDou network device, the terminal retransmits, to the BeiDou network device, the SLC PDU that is in the first SLC SDU and that is not received by the BeiDou network device.

In this way, when a data packet sent by the terminal is lost, a normal data transmission process is ensured.

In a possible implementation, after that a terminal sends N SLC PDUs in a first SLC SDU to a BeiDou network device, the method further includes: When the terminal receives a second ACK sent by the BeiDou network device, the terminal sends one or more SLC PDUs in a second SLC SDU to the BeiDou network device. The second ACK indicates that the BeiDou network device has received the N SLC PDUs in the first SLC SDU.

In this way, after the BeiDou network device receives all SLC PDUs in one SLC SDU sent by the terminal, the terminal sends all SLC PDUs in a next SLC SDU to the BeiDou network device, to maintain continuous data transmission.

In a possible implementation, a value of a SAI field in an SLC PDU in the first SLC SDU is different from a value of a SAI field in an SLC PDU in the second SLC SDU.

In this way, whether a value of a SAI field in an SLC PDU is reversed is used to indicate whether the SLC PDU is retransmitted data. This can ensure that the BeiDou network device identifies whether the received SLC PDU is retransmitted data, thereby ensuring continuous data transmission in the BeiDou communication system.

In a possible implementation, after that a terminal sends N SLC PDUs in a first SLC SDU to a BeiDou network device, the method further includes: When the terminal does not receive, in an ACK receiving time window after the N SLC PDUs in the first SLC SDU are sent to the BeiDou network device, an ACK sent by the BeiDou network device, the terminal retransmits the N SLC PDUs in the first SLC SDU to the BeiDou network device.

In a possible implementation, before that a terminal sends N SLC PDUs in a first SLC SDU to a BeiDou network device, the method further includes: The terminal obtains, at the SLC layer, a plurality of SLC SDUs delivered by the MDCP layer of the terminal. The plurality of SLC SDUs include the first SLC SDU and the second SLC SDU. The terminal segments the first SLC SDU into the N SLC PDUs at the SLC layer.

In a possible implementation, before that the terminal obtains, at the SLC layer, a plurality of SLC SDUs delivered by the MDCP layer of the terminal, the method further includes: The terminal obtains, at the MDCP layer, an application layer packet delivered by an application layer of the terminal. The terminal uses the application layer packet as an MDCP SDU at the MDCP layer, and segments the MDCP SDU into a plurality of MDCP PDUs after padding data and a redundancy length indicator field are added to the MDCP SDU. The redundancy length indicator field indicates a data length of the padding data, the plurality of MDCP PDUs include a first MDCP PDU, packet header information of the first MDCP PDU includes a succession indicator field, and the succession indicator field indicates a position of the first MDCP PDU in the plurality of MDCP PDUs. The terminal delivers the plurality of MDCP PDUs from the MDCP layer to the SLC layer as the plurality of SLC SDUs at the SLC layer.

In a possible implementation, before that the terminal obtains, at the MDCP layer, an application layer packet delivered by an application layer of the terminal, the method further includes: The terminal obtains raw data. The terminal compresses the raw data at the application layer to obtain compressed data. The terminal encrypts the compressed data at the application layer to obtain encrypted data. The terminal adds packet header information to a header of the encrypted data to obtain the application layer packet. The packet header information includes a compression indicator field and an encryption indicator field, the compression indicator field indicates a compression algorithm used when the raw data is compressed, and the encryption indicator field indicates an encryption algorithm used when the compressed data is encrypted.

In a possible implementation, that a terminal sends N SLC PDUs in a first SLC SDU to a BeiDou network device specifically includes: The terminal delivers the first SLC PDU from the SLC layer to a physical PHY layer as a first code block at the PHY layer. The terminal adds check bit information to a tail of the first code block at the PHY layer, and encodes the first code block and the check bit information to obtain first code data. The terminal inserts pilot information into the first code data at the PHY layer, to obtain first pilot data. The terminal modulates the first pilot data and a synchronization header of the first pilot data at the PHY layer, to obtain first modulated data and a first modulated synchronization header. The terminal spreads the first modulated data and the modulated synchronization header at the PHY layer to obtain first spread modulated data. The terminal sends the first spread modulated data to the BeiDou network device at the PHY layer.

In a possible implementation, the terminal determines a start moment of the ACK receiving time window based on a moment at which the terminal completes sending a last SLC PDU in the first SLC SDU, duration of switching the terminal from a transmitting state to a receiving state, an air interface propagation delay, and a signal processing scheduling delay of the BeiDou network device.

The terminal starts, at the start moment of the ACK receiving time window, to receive the ACK sent by the BeiDou network device.

A formula for determining, by the terminal, the start moment of the ACK receiving time window is:

$$tUeTxEnd + tTx2RxSwitch < tUeStartRcvAck$$
$$< tUeTxEnd + 2 * tPropagate + tStationProcess$$

Herein, *tUeStartRcvAck* is the start moment of the ACK receiving time window, *tUeTxEnd* is the moment at which the terminal completes sending the last SLC PDU in the first SLC SDU, *tTx2RxSwitch* is the duration of switching the terminal from the transmitting state to the receiving state, *tPropagate* is the air interface propagation delay, and *tStationProcess* is the signal processing scheduling delay of the BeiDou network device.

In a possible implementation, the terminal determines an end moment of the ACK receiving time window based on a time length of a physical frame sent by the terminal, an air interface propagation delay, a signal processing scheduling delay of the BeiDou network device, a time length of a physical frame sent by the BeiDou network device, and a time alignment deviation of sending the physical frame by the BeiDou network device. The terminal stops, at the end moment of the ACK receiving time window, receiving the ACK sent by the BeiDou network device.

A formula for determining, by the terminal, the end moment of the ACK receiving time window is:

$$tUeEndRcvAck =$$
$$tUeTxEnd + tUeUlFrameLen + 2 * tPropagate + tStationProcess +$$
$$tStationDlFrameLen + \delta$$

Herein, t*UeEndRcvAck* is the end moment of the ACK receiving time window, *tUeUlFrameLen* is the time length of the physical frame sent by the terminal, *tPropagate* is the air interface propagation delay, *tStationProcess* is the signal processing scheduling delay of the BeiDou network device, *tStationDlFrameLen* is the time length of the physical frame sent by the BeiDou network device, and $\delta$ is the time alignment deviation of sending the physical frame by the BeiDou network device.

According to a second aspect, this application provides a communication apparatus, including one or more processors, one or more memories, and a transceiver. The transceiver and the one or more memories are coupled to the one or more processors. The one or more memories are configured to store computer program code. The computer program code includes computer instructions. When the one or more processors execute the computer instructions, the communication apparatus is enabled to perform the method in any possible implementation of the first aspect.

The communication apparatus may be a terminal or a device in another product form.

According to a third aspect, this application provides a computer storage medium, including computer instructions. When the computer instructions are run on a computer, the computer is enabled to perform the method in any possible implementation of the first aspect.

According to a fourth aspect, this application provides a chip or a chip system, applied to a terminal and including a processing circuit and an interface circuit. The interface circuit is configured to receive code instructions and transmit the code instructions to the processing circuit, and the processing circuit is configured to run the code instructions to perform the method in any possible implementation of the first aspect.

**BRIEF DESCRIPTION OF DRAWINGS**

FIG. 1A is a schematic diagram of an architecture of a BeiDou communication system according to an embodiment of this application;

FIG. 1B is a schematic diagram of a BeiDou communication protocol layer according to an embodiment of this application;

FIG. 2 is a schematic diagram of a data inbound transmission process in a BeiDou communication system according to an embodiment of this application;

FIG. 3 is a schematic diagram of a structure of a terminal according to an embodiment of this application;

FIG. 4A and FIG. 4B are a schematic diagram of a protocol encapsulation architecture for inbound data in a BeiDou communication system according to an embodiment of this application;

FIG. 5A and FIG. 5B are a schematic diagram of a protocol parsing architecture for inbound data in a BeiDou communication system according to an embodiment of this application;

FIG. 6A and FIG. 6B are a schematic flowchart of protocol processing of data at an MDCP layer and an SLC layer in a BeiDou communication system according to an embodiment of this application;

FIG. 7 is a schematic diagram of a receiving acknowledgment mechanism at an SLC layer when data is inbound according to an embodiment of this application;

FIG. 8A and FIG. 8B are a schematic flowchart of processing performed when an SLC PDU sent by a terminal is lost according to an embodiment of this application;

FIG. 9A and FIG. 9B are a schematic flowchart of processing performed when an ACK returned by a BeiDou network device is lost according to an embodiment of this application;

FIG. 10A and FIG. 10B are a schematic flowchart of processing performed when both an SLC PDU and an ACK are lost when data is inbound according to an embodiment of this application;

FIG. 11 is a schematic flowchart of an inbound transmission control method in a BeiDou communication system according to an embodiment of this application;

FIG. 12 is a schematic diagram of a structure of a communication apparatus according to an embodiment of this application;

FIG. 13 is a schematic diagram of a structure of another communication apparatus according to an embodiment of this application;

FIG. 14 is a schematic diagram of a structure of another communication apparatus according to an embodiment of this application; and

FIG. 15 is a schematic diagram of a structure of another communication apparatus according to an embodiment of this application.

## DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes a BeiDou communication system 10 according to an embodiment of this application.

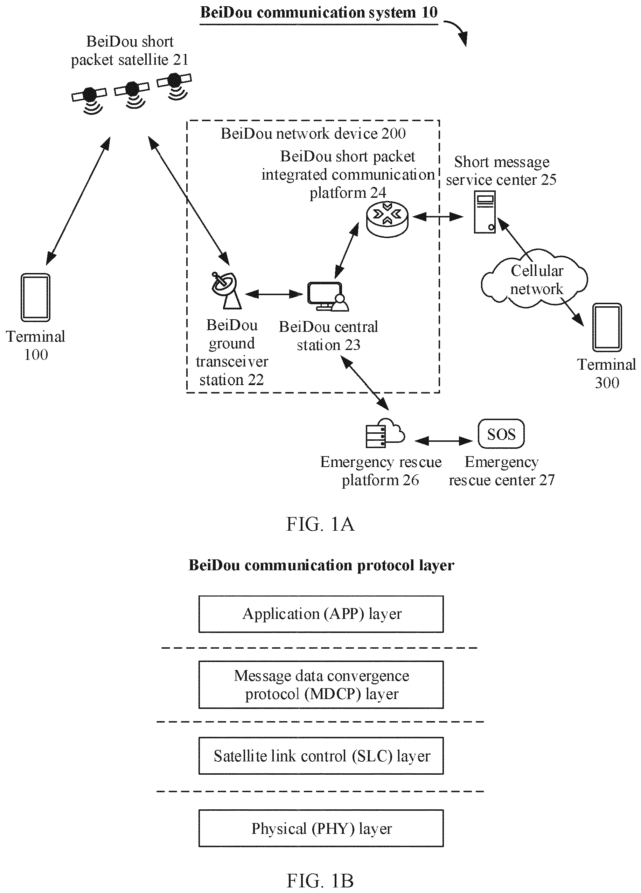

FIG. 1A is a schematic diagram of an architecture of the BeiDou communication system 10 according to an embodiment of this application.

As shown in FIG. 1A, the BeiDou communication system 10 may include a terminal 100, a BeiDou short packet satellite 21, a BeiDou network device 200, a short message service center 25, and a terminal 300. Optionally, the BeiDou communication system 10 may further include an emergency rescue platform 26 and an emergency rescue center 27.

The terminal 100 may send short packet information to the BeiDou short packet satellite 21, and the BeiDou short packet satellite 21 relays and directly forwards the short packet information sent by the terminal 100 to the BeiDou network device 200 on the ground. The BeiDou network device 200 may parse, according to a BeiDou communication protocol, the short packet information forwarded by the satellite, and forward packet content that is of a general packet type and that is obtained through parsing from the short packet information to the short message service center (short message service center, SMSC) 25. The short message service center 25 may forward the packet content to the terminal 300 through a conventional cellular communication network. The BeiDou network device 200 may also send, to the emergency rescue center 27 through the emergency rescue platform 26, a packet of an emergency call type sent by the terminal 100.

The terminal 300 may also send an SMS message to the short message service center 25 through the conventional cellular communication network. The short message service center 25 may forward the SMS message of the terminal 300 to the BeiDou network device 200. The BeiDou network device 200 may send the SMS message of the terminal 300 to the terminal 100 through relay of the BeiDou short packet satellite 21.

The BeiDou network device 200 may include a BeiDou ground transceiver station 22, a BeiDou central station 23, and a BeiDou short packet integrated communication platform 24. The BeiDou ground transceiver station 22 may include one or more devices having a sending function and one or more devices having a receiving function, or may include one or more devices having a sending function and a receiving function. This is not limited herein.

As shown in FIG. 1B, a BeiDou communication protocol layer may include an application (application layer protocol, APP) layer, a message data convergence protocol (message data convergence protocol, MDCP) layer, a satellite link control (satellite link control protocol, SLC) layer, and a physical (physical layer protocol, PHY) layer.

The BeiDou ground transceiver station 22 may be configured to perform a data processing function of the BeiDou network device 200 at the PHY layer. The BeiDou central station 23 may be configured to perform a data processing function of the BeiDou network device 200 at the SLC layer and the MDCP layer. The BeiDou short packet integrated communication platform 24 may be configured to perform a data processing function at the APP layer.

Because the BeiDou communication system 10 performs communication by using a satellite link, a main characteristic of the BeiDou communication system 10 is that a delay is long (about 270 ms in one direction) and a link loss is large. Currently, services supported by the BeiDou communication system 10 are mainly burst short message services, and link status management, mobility management, broadcast control information, and the like are not supported.

The terminal 100 may actively send data to the BeiDou network device 200 through the BeiDou short packet satellite 21. However, because there is no air interface signaling, the central station on the ground cannot actively page a user. Because a satellite communication propagation distance is long, the BeiDou communication system 10 has a high requirement on a transmit power of the terminal 100. Due to a limitation of a radio frequency component on the current terminal 100, the terminal 100 cannot continuously send signals to the BeiDou short packet satellite 21 for long time. To avoid damaging the radio frequency component on the terminal 100 as much as possible, after the radio frequency component of the terminal 100 keeps working in a transmitting state for a period of time, the radio frequency component of the terminal 100 needs to stop working for a period of time before continuing to switch to the transmitting state and continue to work. Duration of the transmitting state on the terminal 100 is determined by an underlying hardware capability of the terminal 100. In the BeiDou communication system 10, to ensure that data received by the terminal 100 and data sent by the terminal 100 do not interfere with each other, the terminal 100 does not support simultaneous data sending and data receiving. After sending the data, the terminal 100 needs to wait to receive data sent by the BeiDou network device 200.

A working mode of the BeiDou network device 200 may be a duplex mode, and data may be sent and received simultaneously. In addition, the BeiDou network device 200 may send and receive data for long time.

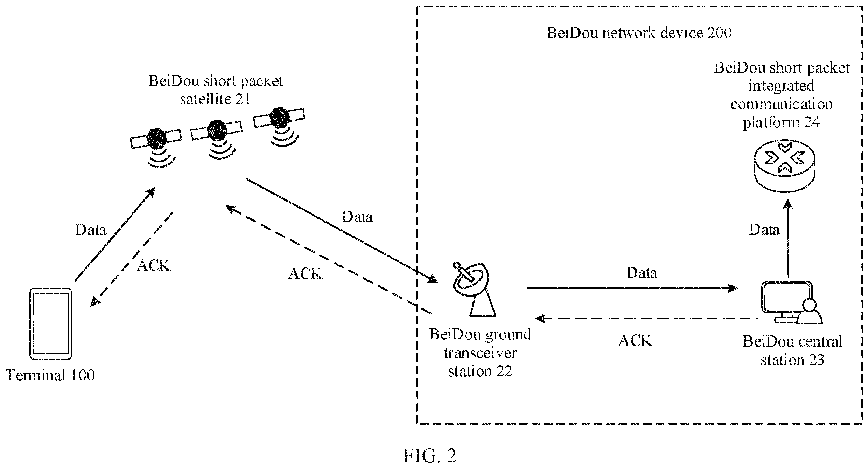

FIG. 2 shows a data inbound transmission process in the BeiDou communication system according to an embodiment of this application.

As shown in FIG. 2, data inbound may mean that the terminal 100 sends data to the BeiDou network device 200. For example, the terminal 100 may send a data frame to the BeiDou ground transceiver station 22. The BeiDou ground transceiver station 22 may send the data frame to the BeiDou central station 23. The BeiDou central station 23 may combine the data frame into an application layer packet and report the application layer packet to the BeiDou short packet integrated communication platform 24. After receiving the data frame sent by the terminal 100, the BeiDou central station 23 may return an acknowledge character (acknowledge character, ACK) at an SLC layer to the terminal 100. The ACK may indicate whether the BeiDou network device 200 successfully receives the data frame sent by the terminal 100.

In cellular and other short-range communication systems, before user equipment sends data, the user equipment may exchange control signaling with a receiving device to pre-allocate sending physical resources of the user equipment. However, in the BeiDou communication system 10, interaction time of control signaling is excessively long, and air interface resources in the BeiDou communication system 10 are limited. Therefore, no dedicated control signaling is designed in the BeiDou communication system 10 to allocate physical resources of the terminal 100 for sending data. In addition, there is no dedicated broadcast channel in the BeiDou communication system 10 to transmit broadcast information, and the terminal 100 cannot obtain configuration information of the BeiDou network device 200 by using the broadcast information. When a packet is lost when the terminal 100 sends data to the BeiDou network device 200, it cannot be ensured that the BeiDou network device 200 can restore complete data.

Therefore, this embodiment of this application provides an inbound transmission control method in the BeiDou communication system. The terminal 100 may segment the application layer packet into a plurality of MDCP PDUs at an MDCP layer. The terminal 100 may sequentially deliver the MDCP PDUs to the SLC layer as an SLC SDU at the SLC layer, and segment the SLC SDU into N SLC PDUs at the SLC layer. Frame header information includes a service data unit alternated indicator (service data unit alternated Indicator, SAI) field, a total frame quantity field, and a frame sequence number field. The SAI field may indicate whether the SLC PDU belongs to an SLC SDU that is not sent. The total frame quantity field may indicate a total quantity of SLC PDUs included in the SLC SDU to which the SLC PDU belongs. The frame sequence number field may indicate a sequence number of the SLC PDU in the SLC SDU to which the SLC PDU belongs.

The terminal 100 may send N SLC PDUs in a first SLC PDU to the BeiDou network device 200.

If the BeiDou network device 200 determines, based on frame header information of a received SLC PDU, that an SLC PDU in the first SLC SDU is missing, the BeiDou network device 200 returns a first ACK to the terminal 100. The first ACK indicates a frame sequence number of an SLC PDU that is in the first SLC SDU and that is not received by the BeiDou network device 200. After receiving the first ACK from the BeiDou network device 200, the terminal 100 retransmits, to the BeiDou network device 200, the SLC PDU that is in the first SLC SDU and that is not received by the BeiDou network device 200.

If the BeiDou network device 200 determines, based on the frame header information of the received SLC PDU, that all the N SLC PDUs in the first SLC SDU are received, the BeiDou network device 200 returns a second ACK to the terminal 100. The second ACK indicates that the BeiDou network device 200 has received the N SLC PDUs in the first SLC SDU. After receiving the second ACK, the terminal 100 may send all SLC PDUs in a second SLC SDU to the BeiDou network device 200.

In this way, when a data packet sent by the terminal 100 or the BeiDou network device 200 is lost, a normal data transmission process is ensured.

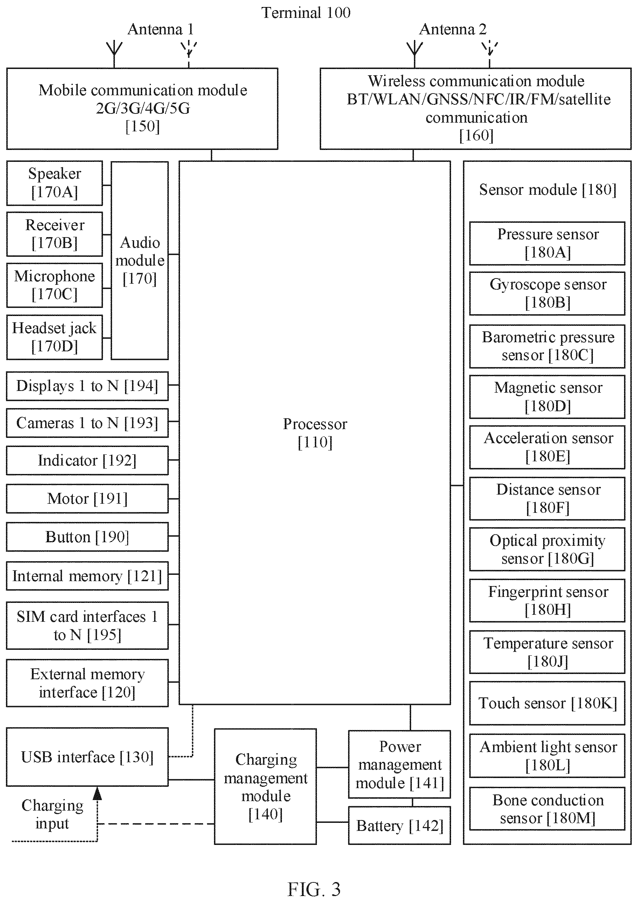

FIG. 3 is a schematic diagram of a structure of a terminal 100.

The following uses the terminal 100 as an example to specifically describe this embodiment. It should be understood that the terminal 100 shown in FIG. 3 is merely an example. The terminal 100 may have more or fewer components than those shown in FIG. 3, or two or more components may be combined, or a different component configuration may be used. Various components shown in FIG. 3 may be implemented in hardware including one or more signal processing and/or application-specific integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the terminal 100. In some other embodiments of this application, the terminal 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface to implement an image shooting function of the terminal 100. The processor 110 communicates with the display 194 through the DSI interface to implement a display function of the terminal 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect a charger to charge the terminal 100, or may also be used to transfer data between the terminal 100 and a peripheral device, or may be configured to connect to a headset for playing audio by using the headset. The interface may be further configured to connect to another electronic device like an AR device.

It may be understood that the interface connection relationship between the modules illustrated in this embodiment of the present invention is merely a schematic illustration, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented through the antenna 1, the antenna 2, the mobile communication module 150, the wireless communication module 160, a modem processor, a baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution including 2G/3G/4G/5G applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), satellite communication module, frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module may be configured to communicate with a satellite network device. For example, in a BeiDou communication system, the satellite communication module may communicate with a BeiDou network device 200, and the satellite communication module may support short packet transmission to the BeiDou network device 200.

In some embodiments, in the terminal 100, the antenna 1 is coupled to the mobile communication module 150, and the antenna 2 is coupled to the wireless communication module 160, so that the terminal 100 can communicate with the network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100 may include 1 or N displays 194, where N is a positive integer greater than 1.

The terminal 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in various encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal 100 may be implemented through the NPU, for example, image recognition, facial recognition, speech recognition, and text understanding

The external memory interface 120 may be configured to connect an external storage card, such as a Micro SD card, to expand a storage capability of the terminal 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (for example, audio data or a phone book) created when the terminal 100 is used. In addition, the internal memory 121 may include a high-speed random access memory, or may include a nonvolatile memory, for example, at least one magnetic disk storage device, a flash memory, or a universal flash storage (universal flash storage, UFS).

The terminal 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal 100 may be used to listen to music or answer a hands-free call over the speaker 170A.

The receiver 170B, also referred to as an "earpiece", is configured to convert an audio electrical signal into a sound signal. When a call is answered or a voice message is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on a change in the capacitance. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an icon of Messages, an instruction for viewing an SMS message is performed. When a touch operation whose touch operation intensity is greater than or equal to the first pressure threshold is performed on the icon of Messages, an instruction for creating an SMS message is performed.

The gyroscope sensor 180B may be configured to determine a motion gesture of the terminal 100. In some embodiments, an angular velocity of the terminal 100 around three axes (namely, axes x, y, and z) may be determined by using the gyroscope sensor 180B. The gyroscope sensor 180B may be configured to implement image stabilization during image shooting. For example, when a shutter is pressed, the gyroscope sensor 180B detects an angle at which the terminal 100 jitters, calculates, based on the angle, a distance for which a lens module needs to compensate, and allows a lens to cancel the jitter of the terminal 100 through reverse motion, to implement the image stabilization. The gyroscope sensor 180B may also be used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a clamshell phone, the terminal 100 may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may measure accelerations of the terminal 100 in various directions (generally three axes). A magnitude and a direction of gravity may be detected when the terminal 100 is still. The acceleration sensor 180E may be further configured to recognize a posture of the electronic device, and is used in applications such as switching between a landscape mode and a portrait mode and a pedometer.

The distance sensor 180F is configured to measure a distance. The terminal 100 may measure a distance in an infrared manner or a laser manner. In some embodiments, in an image shooting scenario, the terminal 100 may measure a distance by using the distance sensor 180F to implement quick focusing.

The optical proximity sensor 180G may include, for example, a light emitting diode (LED) and an optical detector, for example, a photodiode. The light emitting diode may be an infrared light emitting diode. The terminal 100 transmits infrared light by using the light-emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that a user holds the terminal 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external storage card. The terminal 100 interacts with a network through the SIM card, to implement functions such as calling and data communication. In some embodiments, the terminal 100 uses an eSIM, that is, an embedded SIM card. The eSIM card may be embedded in the terminal 100, and cannot be separated from the terminal 100.

The following describes a protocol encapsulation architecture for inbound data in the BeiDou communication system 10 according to an embodiment of this application.

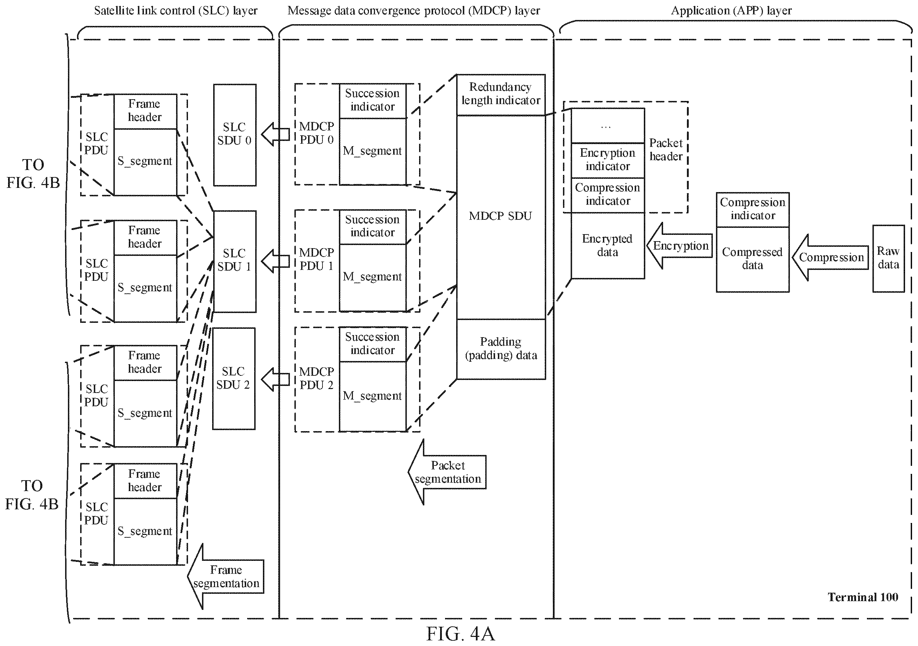

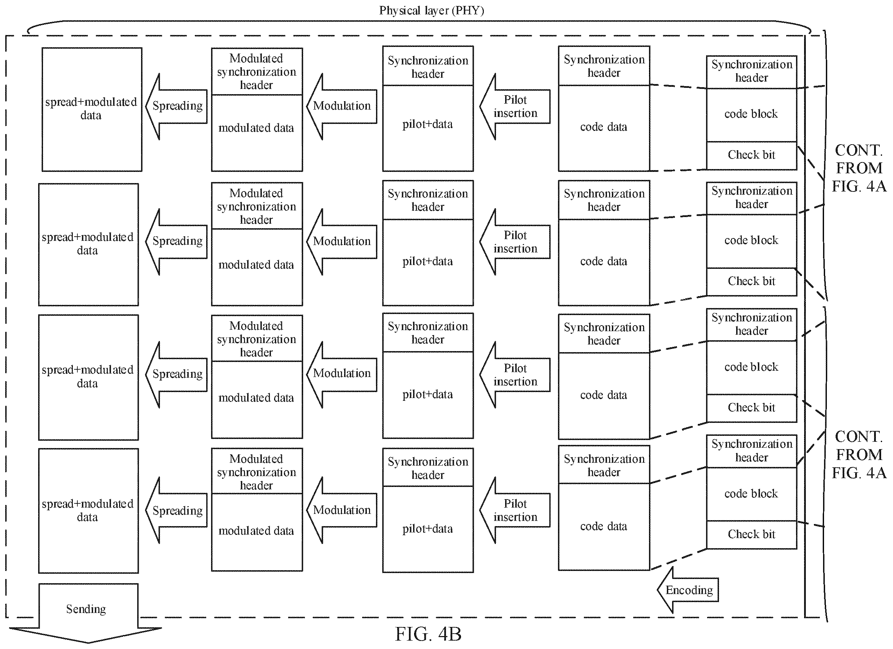

FIG. 4A and FIG. 4B are a schematic diagram of a protocol encapsulation architecture for inbound data in the BeiDou communication system 10 according to this embodiment of this application.

As shown in FIG. 4A and FIG. 4B, a BeiDou packet transmission protocol layer on the terminal 100 may be divided into an application (application layer protocol) layer, a message data convergence protocol (message data convergence protocol, MDCP) layer, a satellite link control (satellite link control protocol, SLC) layer, and a physical (physical layer protocol, PHY) layer.

When the terminal 100 sends data to the BeiDou network device 200, a working procedure of a BeiDou packet transmission protocol on the terminal 100 may be as follows:

At the APP layer, the terminal 100 may compress raw data into compressed data by using a compression algorithm, and add a compression indicator field before the compressed data. The compression indicator field may indicate a compression algorithm type of the compressed data. Then, the terminal 100 may encrypt the compressed data to obtain encrypted data, and add an encryption indicator field to a header of the encrypted data. The encryption indicator field indicates an encryption algorithm type of the encrypted data. The terminal 100 may encapsulate the encrypted data, the compression indicator field, and the encryption indicator field into an application layer packet and deliver the application layer packet to the MDCP layer. The application layer packet includes a packet header and packet data. The packet header includes the compression indicator field, the encryption indicator field, and the like. The packet data includes the encrypted data.

Optionally, the terminal 100 may alternatively encrypt the compression indicator field and the compressed data together, to obtain encrypted data.

At the MDCP layer, the terminal 100 may obtain, through an inter-layer interface, the application layer packet delivered by the APP layer, and use the application layer packet as an MDCP SDU. Due to a limitation of an air interface, the terminal 100 can send only a physical frame of a specified length at the physical layer each time. In this way, a length of data at the MDCP layer is restricted to be a specified length. Therefore, at the MDCP layer, the terminal 100 may add padding (padding) data to a tail of the MDCP SDU, so that the MDCP SDU is of the specified length; and add a redundancy length indicator field to a header of the MDCP SDU. The redundancy length indicator field may indicate a length of the padding data. The terminal 100 may segment the MDCP SDU to which the padding data and the redundancy length indicator field are added into one or more pieces of fixed-length MDCP segment data (M_segment), and add a succession indicator field to a header of each piece of MDCP segment data, to obtain an MDCP PDU. That is, the MDCP PDU includes the M_segment and the succession indicator field. The succession indicator field may indicate that a current MDCP PDU is a start MDCP PDU, an intermediate MDCP PDU, or a last MDCP PDU in a plurality of consecutively-sent MDCP PDUs, or is an MDCP PDU sent separately.

At the SLC layer, the terminal 100 may obtain, through an inter-layer interface, the MDCP PDU delivered by the MDCP layer, and use the MDCP PDU as an SLC SDU. At the SLC layer, the terminal 100 may segment the SLC SDU into one or more (at most four) pieces of fixed-length SLC segment data (S_segment), and add frame header information to a header of each piece of S_segment, to obtain an SLC PDU. The frame header information includes a service data unit alternated indicator (service data unit alternated Indicator, SAI) field, a total frame quantity field, and a frame sequence number field.

The SAI field may indicate whether the SLC PDU belongs to an SLC SDU that is not sent.

The total frame quantity field may indicate a total quantity of SLC PDUs included in the SLC SDU to which the SLC PDU belongs.

The frame sequence number field may indicate a sequence number of the SLC PDU in the SLC SDU to which the SLC PDU belongs.

At the PHY layer, the terminal 100 may obtain, through an inter-layer interface, the SLC PDU delivered by the SLC layer, use the SLC PDU as a code block (code block) at the PHY layer, add a synchronization header to a header of the code block, and add a check bit field to a tail of the code block. In the BeiDou communication system 10, the code block may be checked by using cyclic redundancy check (cyclic redundancy check, CRC). Therefore, the check bit field may include a CRC code. The terminal 100 may encode (for example, polar encoding) the code block and the check bit field to obtain code data (code data), and then insert a pilot into the code data to obtain pilot code data (pilot+data). Then, the terminal 100 sequentially modulates the synchronization header and the pilot code data by using underlying hardware to obtain modulated data (modulated data). The terminal 100 may spread the modulated data to obtain spread modulated data (spread+modulated data). The terminal 100 may send the spread modulated data to the BeiDou short packet satellite 21, and the BeiDou short packet satellite 21 relays and forwards the spread modulated data to the BeiDou network device 200.

The following describes a protocol parsing architecture for inbound data in the BeiDou communication system 10 according to an embodiment of this application.

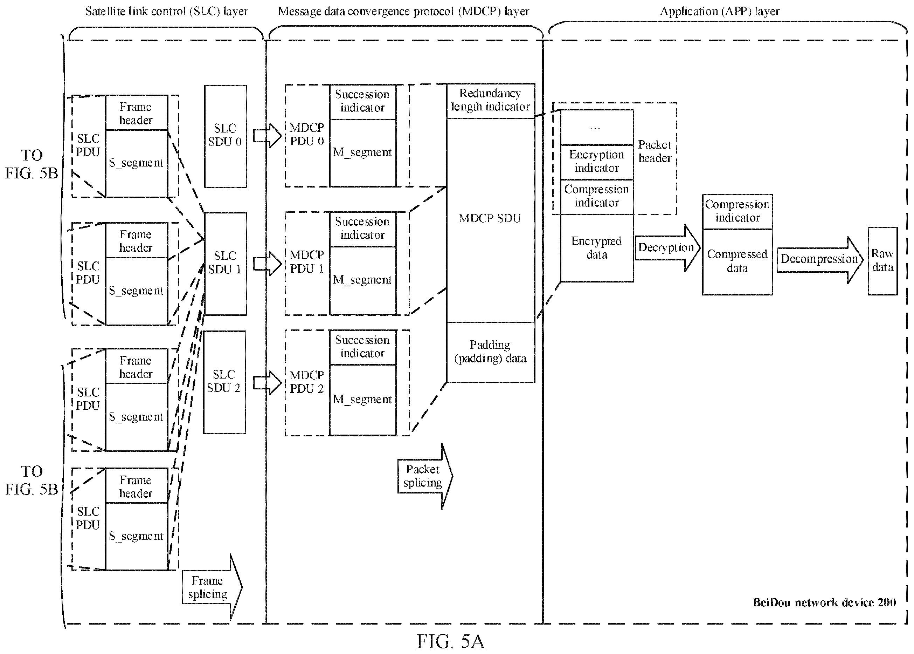

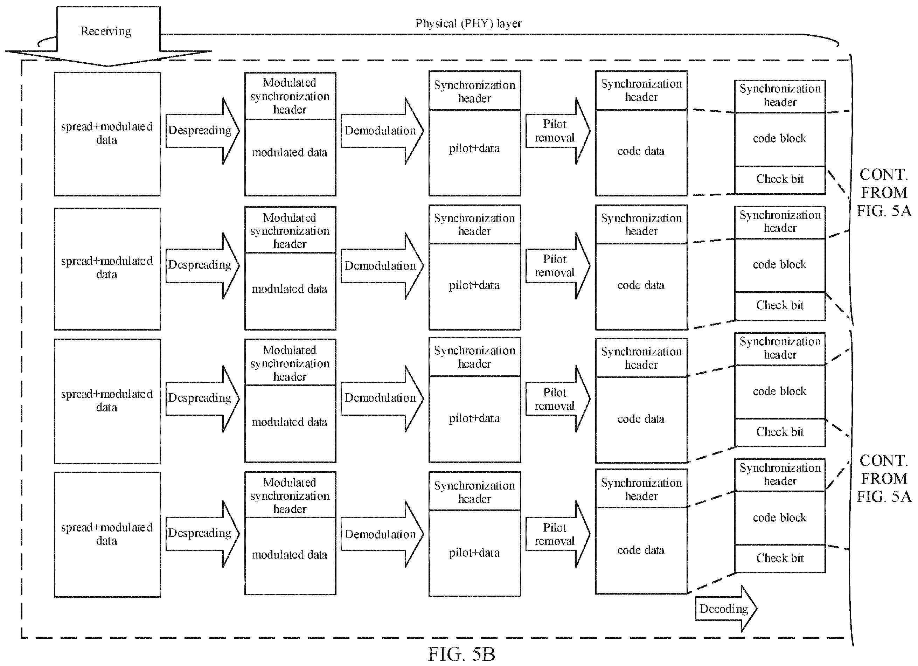

FIG. 5A and FIG. 5B are a schematic diagram of a protocol parsing architecture for inbound data in the BeiDou communication system 10 according to this embodiment of this application.

As shown in FIG. 5A and FIG. 5B, a BeiDou short packet transmission protocol layer of the BeiDou network device 200 may be divided into an APP layer, an MDCP layer, an SLC layer, and a PHY layer. The BeiDou network device 200 may include the BeiDou ground transceiver station 22, the BeiDou central station 23, and the BeiDou short packet integrated communication platform 24. The BeiDou ground transceiver station 22 may be responsible for protocol processing at the PHY layer. The BeiDou central station 23 may be responsible for protocol processing at the SLC layer and the MDCP layer. The BeiDou short packet integrated communication platform 24 may be responsible for protocol processing at the APP layer.

When the BeiDou network device 200 receives data sent by the terminal 100, a working procedure of the BeiDou short packet transmission protocol layer of the BeiDou network device 200 may be as follows:

At the PHY layer, the BeiDou network device 200 may obtain pilot code data that is sent by the terminal 100 and that is modulated and spread. The BeiDou network device 200 may despread received spread modulated data (spread+modulated data), to obtain modulated data (modulated data). Then, the BeiDou network device 200 may demodulate the modulated data, to obtain the pilot code data (pilot+data). Then, the BeiDou network device 200 removes pilot information in the pilot code data, to obtain code data (code data). Then, the BeiDou network device 200 may decode the code data, and verify integrity of a code block (code block) by using check data in a check bit field. If the code block is complete, the BeiDou network device 200 may extract the code block (code block), deliver the code block to the SLC layer through an inter-layer interface, and use the code block as an SLC PDU at the SLC layer.

At the SLC layer, the BeiDou network device 200 may splice, based on frame header information of the SLC PDU, SLC PDUs belonging to a same SLC SDU into one SLC SDU. The BeiDou network device 200 may deliver the SLC SDU to the MDCP layer through an inter-layer interface, and use the SLC SDU as an MDCP PDU at the MDCP layer.

At the MDCP layer, the BeiDou network device 200 may splice all MDCP PDUs belonging to a same MDCP SDU into one MDCP SDU. The BeiDou network device 200 may deliver the MDCP SDU to the APP layer through an inter-layer interface, and use the MDCP SDU as an application layer packet received by the APP layer.

At the APP layer, the BeiDou network device 200 may decrypt and decompress the application layer packet based on a packet header of the application layer packet, to obtain raw data.

In this embodiment of this application, the foregoing protocol processing process is merely an example for description, and a specific protocol processing operation is not limited in this application.

The following describes in detail a protocol processing procedure of data at an MDCP layer and an SLC layer in the BeiDou communication system 10.

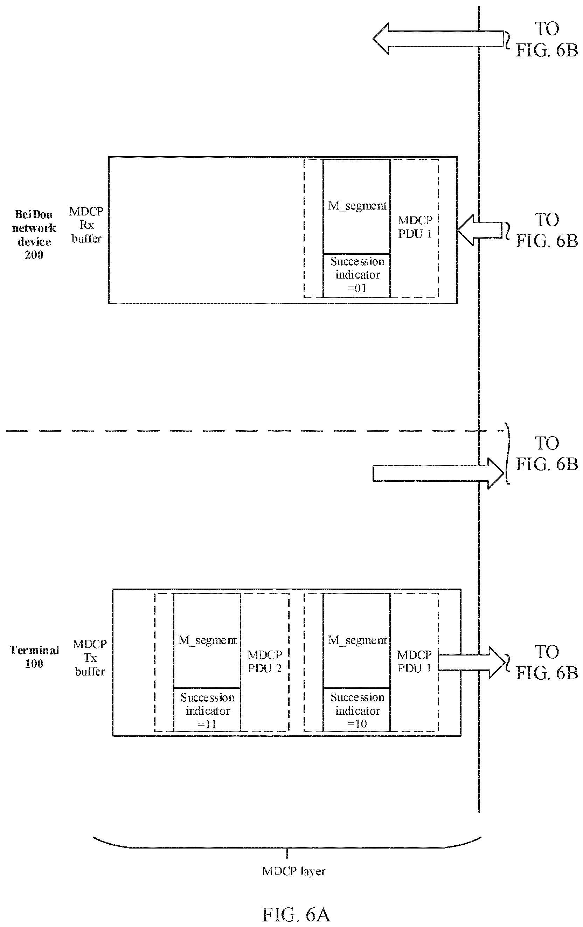

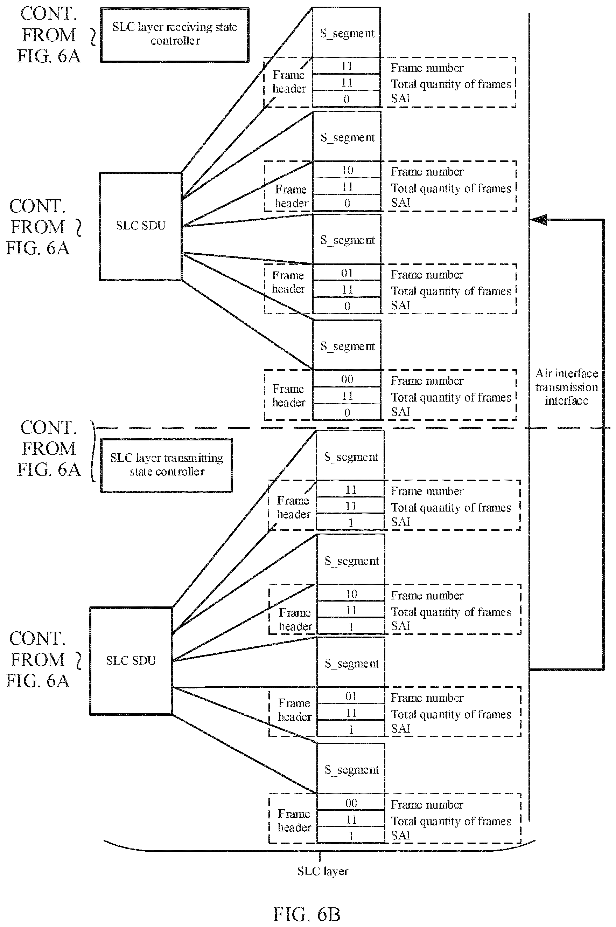

FIG. 6A and FIG. 6B are a schematic flowchart of protocol processing of data at an MDCP layer and an SLC layer in the BeiDou communication system 10 according to an embodiment of this application.

1. A protocol encapsulation process of the terminal 100 for to-be-sent data at the MDCP layer.

As shown in FIG. 6A and FIG. 6B, at the MDCP layer, the terminal 100 may segment an MDCP SDU to which padding (padding) data and a redundancy length indicator field are added into one or more pieces of fixed-length MDCP segment data (M_segment), and add a succession indicator field to a header of each piece of MDCP segment data, to obtain an MDCP PDU. That is, the MDCP PDU includes the M_segment and the succession indicator field. The terminal 100 may store MDCP PDUs obtained through segmentation into an MDCP layer send buffer (MDCP Txbuffer) according to a receiving sequence.

A data length of the succession indicator field may occupy 2 bits (bits). Meanings of values of succession indicator fields may be as follows:

01 indicates that the MDCP PDU is a start MDCP PDU among a plurality of MDCP PDUs in the MDCP SDU;
10 indicates that the MDCP PDU is an intermediate MDCP PDU among the plurality of MDCP PDUs in the MDCP SDU, that is, an MDCP PDU other than the start MDCP PDU and a last MDCP PDU in the MDCP SDU;
11 indicates that the MDCP PDU is the last MDCP PDU among the plurality of MDCP PDUs in the MDCP SDU; and
00 indicates that the MDCP PDU is the only MDCP PDU in the MDCP SDU.

For example, the terminal 100 may segment the MDCP SDU to which the padding (padding) data and the redundancy length indicator field are added into three MDCP PDUs. The three MDCP PDUs are sequentially an MDCP PDU 0, an MDCP PDU 1, and an MDCP PDU 2 in an order from a high bit to a low bit. Because the MDCP PDU 0 is a start MDCP PDU in the current MDCP SDU, the terminal 100 may set a value of a succession indicator field in the MDCP PDU 0 to "01". Because the MDCP PDU 1 is an intermediate MDCP PDU in the current MDCP SDU, the terminal 100 may set a value of a succession indicator field in the MDCP PDU 1 to "10". Because the MDCP PDU 2 is a last MDCP PDU in the current MDCP SDU, the terminal 100 may set a value of a succession indicator field in the MDCP PDU 2 to "11".

For another example, the terminal 100 may segment the MDCP SDU to which the padding (padding) data and the redundancy length indicator field are added into two MDCP PDUs. The two MDCP PDUs are sequentially an MDCP PDU 0 and an MDCP PDU 1 in an order from a high bit to a low bit. Because the MDCP PDU 0 is a start MDCP PDU in the current MDCP SDU, the terminal 100 may set a value of a succession indicator field in the MDCP PDU 0 to "01". Because the MDCP PDU 1 is a last MDCP PDU in the current MDCP SDU, the terminal 100 may set a value of a succession indicator field in the MDCP PDU 1 to "11".

For another example, the terminal 100 may use the MDCP SDU to which the padding (padding) data and the redundancy length indicator field are added as one MDCP PDU 0. Because the MDCP PDU 0 is the only MDCP PDU in the current MDCP SDU, the terminal 100 may set a value of a succession indicator field in the MDCP PDU 0 to "00".

2. A protocol encapsulation process of the terminal 100 for to-be-sent data at the SLC layer.

At the SLC layer, the terminal 100 may control, by using an SLC layer transmitting state controller based on a receiving feedback (for example, an ACK) sent by the BeiDou network device 200, an SLC PDU sending policy at the SLC layer, including initial transmission and retransmission of the SLC PDU. The terminal 100 may obtain, through an inter-layer interface, the MDCP PDU delivered by the MDCP layer, and use the MDCP PDU as an SLC SDU. After sending a previous SLC SDU to the BeiDou network device 200 and confirming that the BeiDou network device 200 successfully receives the previous SLC SDU, the terminal 100 obtains a next MDCP PDU from the MDCP layer as a next SLC SDU, and sends the next MDCP PDU to the BeiDou network device 200.

For example, the terminal 100 may segment the MDCP SDU to which the padding (padding) data and the redundancy length indicator field are added into three MDCP PDUs. The three MDCP PDUs are sequentially an MDCP PDU 0, an MDCP PDU 1, and an MDCP PDU 2 in an order from a high bit to a low bit. At the SLC layer, the terminal 100 first obtains, through the inter-layer interface, the MDCP PDU 0 delivered by the MDCP layer, and the terminal 100 may send the MDCP PDU 0 to the BeiDou network device 200 as a first SLC SDU at the SLC layer in a current packet transmission process. After the terminal 100 determines that data of the first SLC SDU has been sent to the BeiDou network device 200, the terminal 100 may obtain the MDCP PDU 1 from the MDCP layer, and send the MDCP PDU 1 to the BeiDou network device 200 as a second SLC SDU in the current packet transmission process. After the terminal 100 determines that data of the second SLC SDU has been sent to the BeiDou network device 200, the terminal 100 may obtain the MDCP PDU 2 from the MDCP layer, and send the MDCP PDU 2 to the BeiDou network device 200 as a last SLC SDU in the current packet transmission process.

The foregoing examples are merely used to explain this application and shall not be construed as a limitation.

Optionally, the terminal 100 may deliver, at the MDCP layer, all MDCP PDUs belonging to one MDCP SDU to the SLC layer, use the MDCP PDUs as a plurality of SLC SDUs at the SLC layer, and store the SLC SDUs into an SLC layer send buffer. After the terminal 100 completes sending an SLC SDU at the SLC layer, after the terminal 100 completes sending an SLC SDU to the BeiDou network device 200 and determines that the BeiDou network device 200 successfully receives the SLC SDU, the terminal 100 continues to obtain a next SLC SDU from the SLC layer send buffer and send the next SLC SDU.

At the SLC layer, the terminal 100 may segment the SLC SDU into one or more pieces of fixed-length SLC segment data (S_segment), and add frame header information to a header of each piece of S_segment, to obtain an SLC PDU. The frame header information includes a SAI field, a total frame quantity field, and a frame sequence number field.

(1) The SAI field may occupy one bit. A value of the SAI field may be "0" or "1". The terminal 100 may determine whether an SLC PDU to be sent currently belongs to an SLC SDU that is not sent. If the SLC PDU to be sent currently belongs to an SLC SDU that is not sent, the terminal 100 may set a value of a SAI field in the SLC PDU to be different from a value of a SAI field in an SLC PDU in a previous SLC SDU session (including an SLC SDU initial transmission session or an SLC SDU retransmission session). If the SLC PDU to be sent currently does not belong to an SLC SDU that is not sent, the terminal 100 may set a value of a SAI field in the SLC PDU to be the same as a value of a SAI field in an SLC PDU in a previous SLC SDU session. When the value of the SAI field in the SLC PDU is the same as the value of the SAI field in the SLC PDU in the previous SLC SDU session, it indicates that the SLC PDU is retransmitted data.

For example, the terminal 100 needs to transmit three SLC SDUs in an entire application layer packet transmission process. Each SLC SDU may include four SLC PDUs. Values of SAI fields in four SLC PDUs in a first SLC SDU may all be "0". Values of SAI fields in four SLC PDUs in a second SLC SDU may all be "1". Values of SAI fields in four SLC PDUs in a third SLC SDU may all be "0".

The foregoing examples are merely used to explain this application and shall not be construed as a limitation.

(2) The total frame quantity field may indicate a total quantity of SLC PDUs included in the SLC SDU to which the SLC PDU belongs. When one SLC SDU in the BeiDou communication system 10 can be divided into at most four pieces of fixed-length SLC segment data (S_segment), the total frame quantity field may occupy 2 bits.

For example, when the SLC SDU includes only one SLC PDU, a value of a total frame quantity field in the only SLC PDU in the SLC SDU may be "00". When the SLC SDU includes two SLC PDUs, values of total frame quantity fields in the two SLC PDUs in the SLC SDU may all be "01". When the SLC SDU includes three SLC PDUs, values of total frame quantity fields in the three SLC PDUs in the SLC SDU may all be "10". When the SLC SDU includes four SLC PDUs, values of total frame quantity fields in the four SLC PDUs in the SLC SDU may all be "11".

The foregoing examples are merely used to explain this application and shall not be construed as a limitation.

(3) The frame sequence number field may indicate a sequence number of the SLC PDU in the SLC SDU to which the SLC PDU belongs. When one SLC SDU in the BeiDou communication system 10 can be divided into at most four pieces of fixed-length SLC segment data (S_segment), the frame sequence number field may occupy 2 bits.

For example, when the SLC SDU includes only one SLC PDU, a value of a frame sequence number field in the only SLC PDU in the SLC SDU may be "00". When the SLC SDU includes two SLC PDUs, a value of a frame sequence number field in a first SLC PDU in the SLC SDU may be "00", and a value of a frame sequence number field in a second SLC PDU in the SLC SDU may be "01". When the SLC SDU includes three SLC PDUs, a value of a frame sequence number field in a first SLC PDU in the SLC SDU may be "00", a value of a frame sequence number field in a second SLC PDU in the SLC SDU may be "01", and a value of a frame sequence number field in a third SLC PDU in the SLC SDU may be "10". When the SLC SDU includes four SLC PDUs, a value of a frame sequence number field in a first SLC PDU in the SLC SDU may be "00", a value of a frame sequence number field in a second SLC PDU in the SLC SDU may be "01", a value of a frame sequence number field in a third SLC PDU in the SLC SDU may be "10", and a value of a frame sequence number field in a fourth SLC PDU in the SLC SDU may be "11".

The foregoing examples are merely used to explain this application and shall not be construed as a limitation.

In a possible implementation, the frame header information of the SLC PDU may further include an acknowledge mode enable (AM enable) field, and the acknowledge mode enable field may indicate whether the terminal 100 sends the SLC PDU in an acknowledge mode (AM). If the terminal 100 sends the SLC PDU in the acknowledge mode, the BeiDou network device 200 may send feedback information to the terminal 100 at the SLC layer after receiving one or more SLC PDUs sent by the terminal 100. The feedback information is used to notify the terminal 100 of an SLC PDU that is not received by the BeiDou network device 200.

3. A protocol parsing process of the BeiDou network device 200 for received data at the SLC layer.

At the SLC layer, after receiving the SLC PDU of the terminal 100, the BeiDou network device 200 may determine, based on the frame header information of the SLC PDU, whether all SLC PDUs in one SLC SDU are received. If all SLC PDUs in one SLC SDU are received, the BeiDou network device 200 may sequentially splice the received one or more SLC PDUs into one SLC SDU in ascending order of values of frame sequence number fields. If not all SLC PDUs in one SLC SDU are received, the BeiDou network device 200 may send feedback information (for example, an ACK) to the terminal 100 after an SLC layer receiving window ends. The feedback information is used to notify the terminal 100 of the SLC PDU that is not received by the BeiDou network device 200. After completing splicing the SLC SDU, the BeiDou network device 200 may report the SLC SDU to the MDCP layer through an inter-layer interface, and use the SLC SDU as an MDCP PDU.

The BeiDou network device 200 may control, by using an SLC layer receiving state controller based on the SAI field in the SLC PDU, a sending policy of feedback information (for example, an ACK) at the SLC layer and splicing of the SLC PDUs. Duration of the SLC layer receiving state controller is maximum retransmission time of the SLC PDU on the terminal 100.

For example, a SAI value of the first SLC PDU in the first SLC SDU received by the BeiDou network device 200 may be "0", a total frame quantity value is "11", and a frame sequence number is "00". A SAI value of the second SLC PDU in the first SLC SDU may be "0", a total frame quantity value is "11", and a frame sequence number is "01". A SAI value of the third SLC PDU in the first SLC SDU may be "0", a total frame quantity value is "11", and a frame sequence number is "10". A SAI value of the fourth SLC PDU in the first SLC SDU may be "0", a total frame quantity value is "11", and a frame sequence number is "11". The BeiDou network device 200 may splice the four SLC PDUs into the first SLC SDU in ascending order of frame sequence numbers, report the first SLC SDU to the MDCP layer, and use the first SLC SDU as the MDCP PDU 0 at the MDCP layer. The BeiDou network device 200 may store the MDCP PDU 0 into an MDCP layer receive buffer (MDCP Rxbuffer). The value of the succession indicator field in the MDCP PDU 0 is "01".

A SAI value of the first SLC PDU in the second SLC SDU received by the BeiDou network device 200 may be "1", a total frame quantity value is "11", and a frame sequence number is "00". A SAI value of the second SLC PDU in the second SLC SDU may be "1", a total frame quantity value is "11", and a frame sequence number is "01". A SAI value of the third SLC PDU in the second SLC SDU may be "1", a total frame quantity value is "11", and a frame sequence number is "10". A SAI value of the fourth SLC PDU in the second SLC SDU may be "1", a total frame quantity value is "11", and a frame sequence number is "11". The BeiDou network device 200 may splice the four SLC PDUs into the second SLC SDU in ascending order of frame sequence numbers, report the second SLC SDU to the MDCP layer, and use the second SLC SDU as the MDCP PDU 1 at the MDCP layer. The BeiDou network device 200 may store the MDCP PDU 1 into the MDCP layer receive buffer (MDCP Rxbuffer). The value of the succession indicator field in the MDCP PDU 1 is "10".

A SAI value of the first SLC PDU in the third SLC SDU received by the BeiDou network device 200 may be "0", a total frame quantity value is "11", and a frame sequence number is "00". A SAI value of the second SLC PDU in the third SLC SDU may be "0", a total frame quantity value is "11", and a frame sequence number is "01". A SAI value of the third SLC PDU in the third SLC SDU may be "0", a total frame quantity value is "11", and a frame sequence number is "10". A SAI value of the fourth SLC PDU in the third SLC SDU may be "0", a total frame quantity value is "11", and a frame sequence number is "11". The BeiDou network device 200 may splice the four SLC PDUs into the third SLC SDU in ascending order of frame sequence numbers, report the third SLC SDU to the MDCP layer, and use the third SLC SDU as the MDCP PDU 2 at the MDCP layer. The BeiDou network device 200 may store the MDCP PDU 2 into the MDCP layer receive buffer (MDCP Rxbuffer). The value of the succession indicator field in the MDCP PDU 2 is "11".

The foregoing examples are merely used to explain this application and shall not be construed as a limitation.

4. A protocol parsing process of the BeiDou network device 200 for received data at the MDCP layer.

At the MDCP layer, after receiving all MDCP PDUs of one MDCP SDU sent by the terminal 100, the BeiDou network device 200 may combine a plurality of MDCP PDUs based on succession indicator fields in the MDCP PDUs and according to a receiving time sequence, to obtain the MDCP SDU.

After the BeiDou network device 200 obtains, from the SLC layer, the MDCP PDU whose value of the succession indicator field is "11", the BeiDou network device 200 may obtain all MDCP PDUs from the MDCP Rxbuffer, splice the MDCP PDUs based on values of succession indicator fields and according to a receiving time sequence, and remove the redundancy indicator field and the padding data after the splicing, to obtain the MDCP SDU. The BeiDou network device 200 may report the MDCP SDU to the application layer through an inter-layer interface, and use the MDCP SDU as an application layer packet.

The following describes a receiving acknowledgment mechanism at an SLC layer when data is inbound in the BeiDou communication system 10 according to an embodiment of this application.

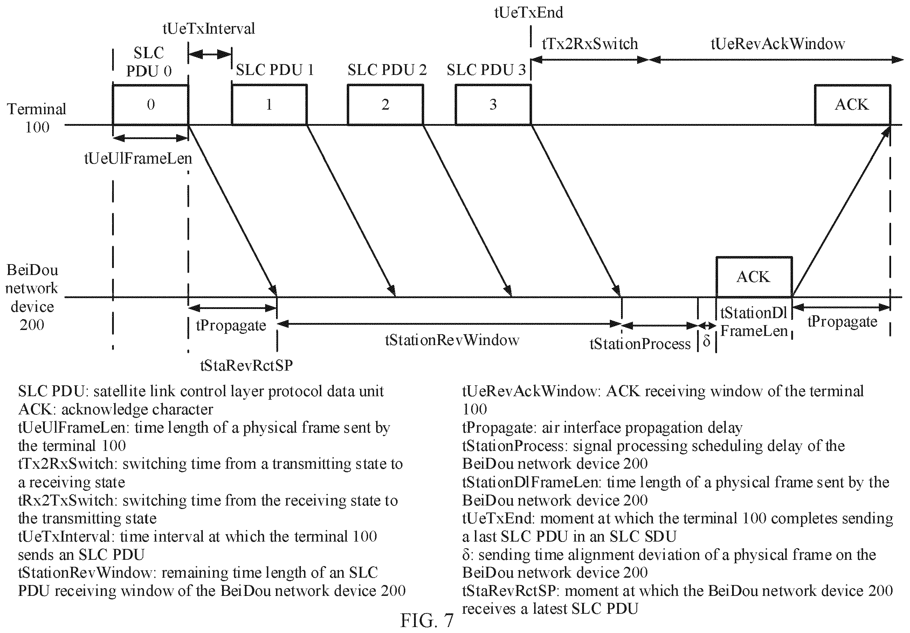

FIG. 7 shows a receiving acknowledgment mechanism at an SLC layer when data is inbound according to this embodiment of this application.

As shown in FIG. 7, a communication interaction process of the BeiDou communication system 10 at the SLC layer may be as follows:

1. The terminal 100 may send N SLC PDUs in an SLC SDU at equal intervals in ascending order of frame sequence numbers. N≤M, and M is a maximum quantity of segments of the SLC SDU. In this embodiment of this application, an example in which a value of M is 4 is used for description.

2. After receiving a first SLC PDU, the BeiDou network device 200 starts an SLC layer receiving session (session) at a moment t0, calculates a remaining time length (tStationRevwindow) of an SLC PDU receiving window, and feeds back an ACK to the terminal 100 after the SLC PDU receiving window ends. A data part of the ACK occupies N bits, and indicates a frame sequence number of an SLC PDU that has been received by the BeiDou network device 200. An $i^{th}$ bit of the data part of the ACK may indicate whether the BeiDou network device 200 has received an $i^{th}$ SLC PDU in the SLC SDU, where i≤N.

3. After sending the N SLC PDUs, the terminal 100 switches radio frequency hardware from a transmitting (Tx) state to a receiving (Rx) state, and receives, in an ACK receiving window, the ACK fed back by the BeiDou network device 200.

The following describes the parameters shown in FIG. 7 and meanings thereof.

(1) tStationProcess indicates a signal processing scheduling delay of the BeiDou network device 200. Because tStationProcess is dynamic, it needs to be ensured that a maximum delay is fixed. Based on test data, a minimum value (t_MinStatProc) of tStationProcess may be 1s, and a maximum value (t_MaxStatProc) of tStationProcess may be 4s.

(2) tPropagate indicates an air interface propagation delay between the terminal 100 and the BeiDou network device 200. Based on test data, a typical value of tPropagate may be 270 ms.

(3) tUeRevAckWindow indicates a length of a duration window in which the terminal 100 receives an ACK.

(4) tUeStartRcvAck indicates a start moment at which the terminal 100 receives the ACK.

(5) tUeEndRcvAck indicates a stop moment at which the terminal 100 receives the ACK.

(6) tTx2RxSwitch indicates duration for switching the terminal 100 from the transmitting state to the receiving state. Based on test data, a typical value of tTx2RxSwitch may be 600 ms.

(7) $\delta$ indicates a sending time alignment deviation of an outbound physical frame on the BeiDou network device 200. The BeiDou network device 200 may not be at a sending moment of the outbound physical frame when completing signal processing and scheduling, and can only send the physical frame when a sending moment of a next outbound physical frame arrives. $0 \leq \delta \leq 125$ ms.

(8) tUeUlFrameLen indicates a time length of an SLC PDU sent by the terminal 100. $128 \text{ ms} \leq \text{tUeUlFrameLen} \leq 512 \text{ ms}$.

(9) nUeTotalFrameNum indicates a total quantity of frames of an SLC SDU segmented by the terminal 100, that is, a total quantity of frames of SLC PDUs included in one SLC SDU.

(10) tUeTxInterval indicates a time interval at which the terminal 100 sends the SLC PDU. The sending interval (tUeTxInterval) of the SLC PDU may be a time interval between a sending end moment of a previous SLC PDU and a sending start moment of a next SLC PDU in two adjacent SLC PDUs. tUeTxInterval is a preset value. For example, a typical value of tUeTxInterval may be 2s.

(11) tStationRevWindow indicates a remaining time length of an SLC PDU receiving time window of the BeiDou network device 200, which is short for a remaining time length of an SLC PDU receiving window.

(12) tStationSendAck indicates time at which the BeiDou network device 200 sends an ACK to the terminal 100.

(13) nStationRevFrameSN indicates a frame sequence number of an SLC PDU currently received by the BeiDou network device 200. In this embodiment of this application, the SLC SDU may include at most four frames of SLC PDUs. Therefore, $0 \leq \text{nStationRevFrameSN} \leq 3$, and nStationRevFrameSN is an integer.

(14) tUeTxEnd indicates a moment at which the terminal 100 completes sending a last SLC PDU in the SLC SDU, and is used as a reference point of time for receiving the ACK.

(15) tStationDlFrameLen indicates a time length of a physical frame sent by the BeiDou network device 200. In this embodiment of this application, a value of tStationDlFrameLen is a fixed value. For example, a value of tStationDl-FrameLen may be 125 ms.

The following describes in detail how the BeiDou network device 200 determines the remaining time length of the SLC PDU receiving window, and how the terminal 100 determines a start moment of the ACK receiving window and an end moment of the ACK window in this embodiment of this application.

1. The BeiDou network device 200 may determine the remaining time length of the SLC PDU receiving window of the BeiDou network device 200 based on a frame sequence number of a latest received SLC PDU, a total quantity of frames of SLC PDUs in a current SLC SDU session, a receiving moment at which the BeiDou network device 200 receives the latest SLC PDU, a time interval at which the terminal 100 sends the SLC PDU, and a time length (that is, a frame length of an inbound physical frame) of a physical frame sent by the terminal 100.

The BeiDou network device 200 may determine the remaining time length of the SLC PDU receiving window by using the following formula (1):

$$tStationRevWindow = tStatRevRctSP +$$
$$(nUeTotalFrameNum - nRevFrameSN - 1) * (tUeTxInterval +$$
$$tUeUlFrameLen) \text{ Formula (1)}$$

In the foregoing formula (1), *tStationRevWindow* is the remaining time length of the SLC PDU receiving window of the BeiDou network device 200; *nUeTotalFrameNum* is the total quantity of frames of SLC PDUs in the current SLC SDU session; *nRevFrameSN* is the frame sequence number of the latest SLC PDU received by the BeiDou network device 200; *tStatRevRctSP* is the receiving moment at which the BeiDou network device 200 receives the latest SLC PDU; *tUeTxInterval* is the time interval at which the terminal 100 sends the SLC PDU; and *tUeUlFrameLen* is the time length of the physical frame sent by the terminal 100. A value of *tUeTxInterval* is preset on the terminal 100 and the BeiDou network device 200. *nRevFrameSN*={0, 1, ..., *nUeTotalFrameNum*-1}.

2. The BeiDou network device 200 may determine, based on the receiving moment at which the latest SLC PDU is received, the remaining time length of the SLC PDU receiving window, and the signal processing scheduling delay of the BeiDou network device 200, a time point for sending an ACK.

The BeiDou network device 200 may determine, according to the following formula (2), the time point for sending the ACK:

$$tStationSendAck =$$
$$tStationRevWindow + tStationProcess + \delta \text{ Formula (2)}$$

In the foregoing formula (2), *tStationSendAck* is the time point at which the BeiDou network device 200 sends the ACK; *tStationRevWindow* is the remaining time length of the SLC PDU receiving window of the BeiDou network device 200; *tStationProcess* is the signal processing scheduling delay of the BeiDou network device 200; $\delta$ is the sending time alignment deviation of the outbound physical frame on the BeiDou network device 200; and *tStationAckLen* is a time length of the ACK sent by the BeiDou network device 200, where a value of *tStationAckLen* may be 125 ms.

3. The terminal 100 may determine, based on the moment at which the terminal 100 completes sending the last SLC PDU in the SLC SDU, the duration for switching the terminal 100 from the transmitting (Tx) state to the receiving (Rx) state, the air interface propagation delay, and the signal processing scheduling delay of the BeiDou network device 200, the start moment at which the terminal 100 receives the ACK.

The terminal 100 may determine, according to the following formula (3), the start moment for receiving the ACK:

$$tUeTxEnd + tTx2RxSwitch < tUeStartRcvAck < tUeTxEnd + 2 *$$
$$tPropagate + tStationProcess \text{ Formula (3)}$$

In the foregoing formula (3), *tUeStartRcvAck* is the start moment at which the terminal 100 receives the ACK; *tUeTxEnd* is the moment at which the terminal 100 completes sending the last SLC PDU in the SLC SDU; *tTx2RxSwitch* is the duration for switching the terminal 100 from the transmitting state to the receiving state; *tPropagate* is the air interface propagation delay between the terminal 100 and the BeiDou network device 200; and *tStationProcess* is the signal processing scheduling delay of the BeiDou network device 200, where *tStationProcess* may be a minimum value t_MinStatProc (for example, 1 second).

4. The terminal 100 may determine, based on the time length of the physical frame sent by the terminal 100, the air interface propagation delay between the terminal 100 and the BeiDou network device 200, the signal processing scheduling delay, the time length of the physical frame sent by the BeiDou network device 200, and the sending time alignment deviation of the outbound physical frame on the BeiDou network device 200, an end moment at which the terminal 100 receives the ACK.

The terminal 100 may determine, according to the following formula (4), the end moment for returning the ACK:

$$tUeEndRcvAck =$$

$$tUeTxEnd + tUeUlFrameLen + 2 * tPropagate + tStationProcess +$$

$$tStationDlFrameLen + \delta \quad \text{Formula (4)}$$

In the foregoing formula (4), *tUeEndRcvAck* is the end moment at which the terminal 100 receives the ACK; *tUeUlFrameLen* is the time length of the SLC PDU sent by the terminal 100; *tPropagate* is the air interface propagation delay between the terminal 100 and the BeiDou network device 200; *tStationProcess* is the signal processing scheduling delay of the BeiDou network device 200, where *tStationProcess* may be a maximum value t_MaxStatProc (for example, 4 seconds); *tStationDlFrameLen* is the time length of the physical frame sent by the BeiDou network device, where a value of *tStationDlFrameLen* may be 125 ms; and $\delta$ is the sending time alignment deviation of the outbound physical frame on the BeiDou network device 200, where in the formula (4), a value of $\delta$ is 125 ms.

The following describes a processing procedure in a scenario in which an SLC PDU sent by the terminal 100 is lost according to an embodiment of this application.

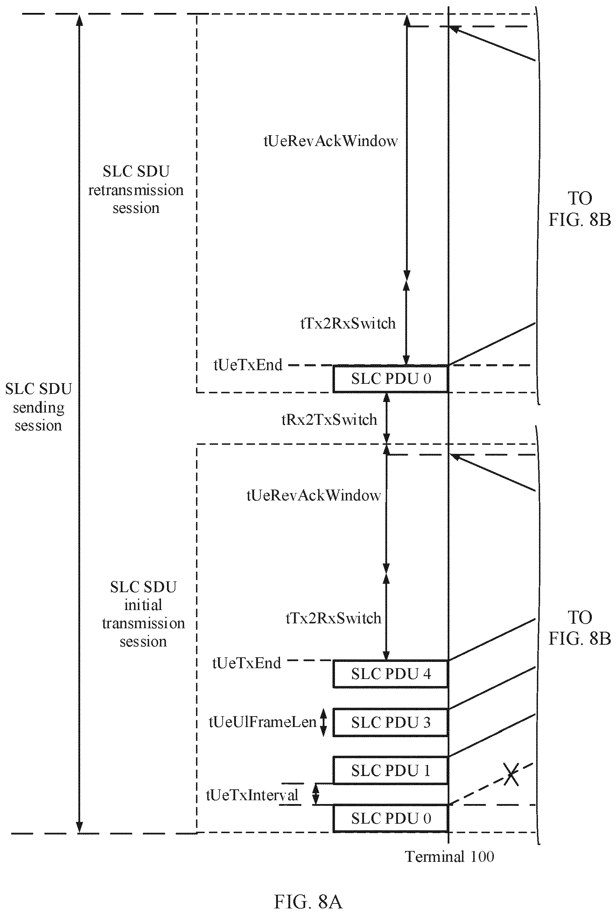

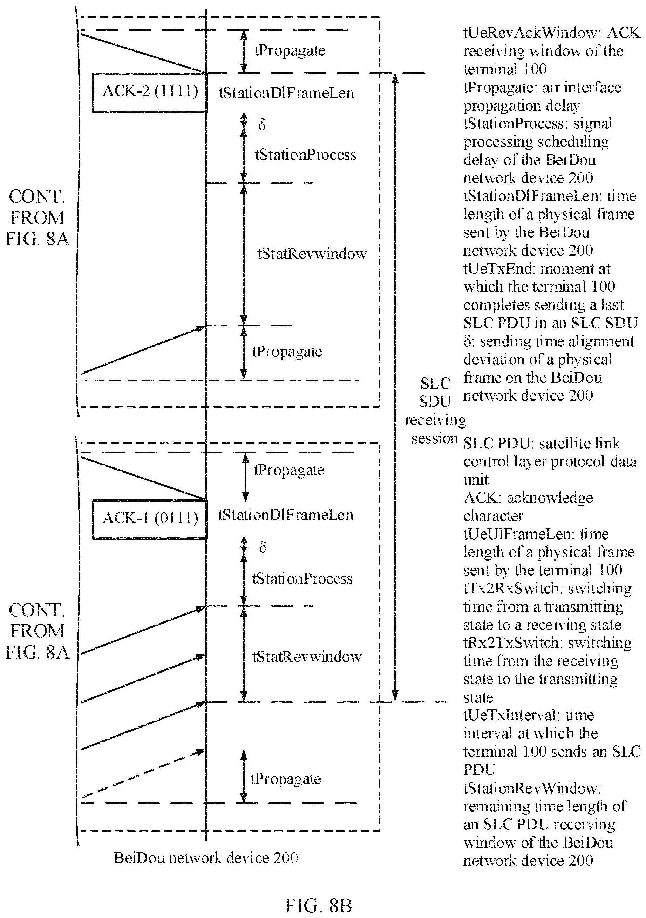

FIG. 8A and FIG. 8B show a processing procedure when an SLC PDU sent by the terminal 100 is lost according to this embodiment of this application.

As shown in FIG. 8A and FIG. 8B, a processing procedure when a packet loss occurs in the SLC PDU may be as follows:

1. In an SLC SDU initial transmission session (session), the terminal 100 may send N SLC PDUs in an SLC SDU at equal intervals in ascending order of frame sequence numbers. 1≤N≤M, and M is a maximum quantity of segments of the SLC SDU. In this embodiment of this application, an example in which a value of M is 4 is used for description.

An $x^{th}$ SLC PDU in the N SLC PDUs is lost in a transmission process, where 0≤x≤N-1.

2. After receiving the SLC PDU sent by the terminal 100, the BeiDou network device 200 may determine a remaining time length (tStatRevwindow) of an SLC PDU receiving window according to the foregoing formula (1). The BeiDou network device 200 may determine, according to the foregoing formula (2), a time point for returning an ACK to the terminal 100.

3. Because the $x^{th}$ SLC PDU is lost, the BeiDou network device 200 may send an ACK-1 to the terminal 100 at the time point for returning an ACK to the terminal 100. Because the $x^{th}$ SLC PDU is lost, the ACK-1 may indicate that the BeiDou network device 200 does not receive the $x^{th}$ SLC PDU.

4. The terminal 100 may determine start time and end time of an ACK receiving window according to the foregoing formula (3) and formula (4).

5. The terminal 100 may receive, in the ACK receiving window, the ACK-1 sent by the BeiDou network device 200.

6. After receiving the ACK-1, the terminal 100 may determine that the BeiDou network device 200 does not receive the $x^{th}$ SLC PDU. After the ACK receiving window ends, the terminal 100 may switch from a receiving state to a transmitting state, start an SLC SDU retransmission session (session), and retransmit the $x^{th}$ SLC PDU. A SAI value of the $x^{th}$ SLC PDU in the SLC SDU retransmission session is the same as a SAI value of the $x^{th}$ SLC PDU in the SLC SDU initial transmission session, and SAI values of all SLC PDUs in the SLC SDU initial transmission session are the same.

7. After receiving the $x^{th}$ SLC PDU, the BeiDou network device 200 may determine that the SAI value of the $x^{th}$ SLC PDU is the same as the SAI value of the SLC PDU in the previous SLC SDU session (that is, the SLC SDU initial transmission session). Therefore, the BeiDou network device 200 determines that the currently received $x^{th}$ SLC PDU is a retransmitted SLC PDU.

8. The BeiDou network device 200 may determine the remaining time length (tStatRevwindow) of the SLC PDU receiving window according to the foregoing formula (1). The BeiDou network device 200 may determine, according to the foregoing formula (2), a time point for returning an ACK to the terminal 100.

9. The BeiDou network device 200 may send an ACK-2 to the terminal 100 at the time point for returning an ACK to the terminal 100. The ACK-2 may indicate that the BeiDou network device 200 has received all SLC PDUs in the SLC SDU.

10. After receiving the $x^{th}$ SLC PDU retransmitted by the terminal 100, the BeiDou network device 200 may splice the SLC PDU received in the SLC SDU initial transmission session and the $x^{th}$ SLC PDU received in the SLC SDU retransmission session into an SLC SDU based on frame sequence numbers.

11. The BeiDou network device 200 may report the spliced SLC SDU from an SLC layer to an MDCP layer through an inter-layer interface, to perform MDCP layer processing. For a processing process of the MDCP layer, refer to the embodiment shown in FIG. 6A and FIG. 6B. Details are not described herein again.

12. In the SLC SDU retransmission session, the terminal 100 may use an end moment for resending the $x^{th}$ SLC PDU as a moment for completing sending a last SLC PDU in the SLC SDU retransmission session, and determine the start time and the end time of the ACK receiving window according to the foregoing formula (3) and formula (4).

13. The terminal 100 may receive, in the ACK receiving window, the ACK-2 sent by the BeiDou network device 200. After receiving the ACK-2, the terminal 100 may determine that the BeiDou network device 200 has received the retransmitted $x^{th}$ SLC PDU, that is, the BeiDou network device 200 has received all SLC PDUs in the current SLC SDU.

14. After receiving the ACK-2, the terminal 100 may enter a next SLC SDU sending session, and initially transmit all SLC PDUs in the next SLC SDU at equal intervals in ascending order of frame sequence numbers.

For example, in the SLC SDU initial transmission session, the terminal 100 may send four SLC PDUs to the BeiDou network device 200 at equal intervals. The BeiDou network device 200 receives only 1st, 2nd, and 3rd SLC PDUs. The BeiDou network device 200 determines, based on a total quantity of frames and frame sequence numbers that are of the received SLC PDUs, that a 0th SLC PDU is lost. Therefore, the BeiDou network device 200 may return the ACK-1 at the time point for returning an ACK. A data part of the ACK-1 occupies 4 bits, a value of the data part of the ACK-1 may be "0111", and the value "0111" indicates that the BeiDou network device 200 does not receive the 0th SLC PDU, and has received the 1st, 2nd, and 3rd SLC PDUs. After receiving the ACK-1, the terminal 100 may separately retransmit the 0th SLC PDU to the BeiDou network device 200 in the SLC SDU retransmission session. After receiving the retransmitted 0th SLC PDU, the BeiDou network device 200 may send the ACK-2 to the terminal 100 at the time point for returning an ACK to the terminal 100. A data part of the ACK-2 occupies 4 bits, a value of the data part of the ACK-2 may be "1111", and the value "1111" indicates that the BeiDou network device 200 has received all the 0th, 1st, 2nd, and 3rd SLC PDUs. The BeiDou network device 200 may splice the received 0th SLC PDU and the received 1st, 2nd, and 3rd SLC PDUs into one SLC SDU based on frame sequence numbers, and report the SLC SDU to the MDCP layer. After receiving the ACK-2, the terminal 100 may enter a next SLC SDU sending session, and initially transmit all SLC PDUs in the next SLC SDU.

The foregoing examples are merely used to explain this application and shall not be construed as a limitation.

It should be noted that in a transmission process of the N SLC PDUs in the SLC SDU, one SLC PDU may be lost, a plurality of SLC PDUs may be lost, or even all the N SLC PDUs may be lost.

For example, in the SLC SDU initial transmission session, the terminal 100 may send four SLC PDUs to the BeiDou network device 200 at equal intervals. The BeiDou network device 200 receives only a 1st SLC PDU and a 3rd SLC PDU. The BeiDou network device 200 determines, based on a total quantity of frames and frame sequence numbers that are of the received SLC PDUs, that a 0th SLC PDU and a 2nd SLC PDU are lost. The BeiDou network device 200 may return the ACK-1 at the time point for returning an ACK. A data part of the ACK-1 occupies 4 bits, a value of the data part of the ACK-1 may be "0101", and the value "0101" indicates that the BeiDou network device 200 does not receive the 0th SLC PDU and the 2nd SLC PDU, and has received the 1st SLC PDU and the 3rd SLC PDU. After receiving the ACK-1, the terminal 100 may separately retransmit the 0th SLC PDU and the 2nd SLC PDU to the BeiDou network device 200 in the SLC SDU retransmission session. After receiving the retransmitted 0th SLC PDU and 2nd SLC PDU, the BeiDou network device 200 may send the ACK-2 to the terminal 100 at the time point for returning an ACK to the terminal 100. A data part of the ACK-2 occupies 4 bits, a value of the data part of the ACK-2 may be "1111", and the value "1111" indicates that the BeiDou network device 200 has received all the 0th, 1st, 2nd, and 3rd SLC PDUs. After receiving the ACK-2, the terminal 100 may enter a next SLC SDU sending session, and initially transmit all SLC PDUs in the next SLC SDU.

For another example, in the SLC SDU initial transmission session, the terminal 100 may send four SLC PDUs to the BeiDou network device 200 at equal intervals. All the four SLC PDUs are lost. Because the BeiDou network device 200 does not receive the four SLC PDUs, and does not know whether the terminal 100 has sent the SLC PDUs, the BeiDou network device 200 does not return an ACK to the terminal 100. If the terminal 100 does not receive the ACK of the BeiDou network device 200 in the ACK receiving window, the terminal 100 switches from the receiving state to the transmitting state, starts an SLC SDU retransmission session, and retransmits the four SLC PDUs. After receiving the four SLC PDUs, the BeiDou network device 200 may return the ACK-2 to the terminal 100 at an ACK sending time point. After receiving the ACK-2, the terminal 100 may enter a next SLC SDU sending session, and initially transmit all SLC PDUs in the next SLC SDU.

The foregoing examples are merely used to explain this application and shall not be construed as a limitation.

In a possible implementation, an SLC PDU retransmitted by the terminal 100 may still be lost. Therefore, after retransmitting the $x^{th}$ SLC PDU to the BeiDou network device 200, the terminal 100 still does not receive an ACK that is returned by the BeiDou network device 200 and that indicates that the $x^{th}$ SLC PDU is received. In this case, the terminal 100 may continue to retransmit the $x^{th}$ SLC PDU.

Radio transmission resources are considered, and therefore, the terminal 100 cannot retransmit an SLC PDU in an SLC SDU without a limitation. A quantity of times for retransmitting an SLC PDU in an SLC SDU by the terminal 100 needs to be limited to a maximum quantity of retransmission times (MaxReTxNum). Both the terminal 100 and the BeiDou network device 200 may store the maximum quantity of retransmission times (MaxReTxNum).

After receiving a plurality of SLC PDUs in the SLC SDU initial transmission session, but not receiving all SLC SDU PDUs, the BeiDou network device 200 may determine, based on the maximum quantity of retransmission times (MaxReTxNum) and a time length of a single SLC SDU session, maximum transmission time of the SLC SDU.

When the maximum transmission time of the SLC SDU ends, the BeiDou network device 200 may consider that the terminal 100 no longer sends a retransmitted SLC PDU to the BeiDou network device 200. Therefore, the BeiDou network device 200 may discard a plurality of SLC PDUs that are not received in the SLC SDU initial transmission session, and end an SLC layer session with the terminal 100. After the BeiDou network device 200 ends the SLC layer session (SLC session) with the terminal 100, if the MDCP layer does not receive a last MDCP PDU in an entire application layer packet transmission process, the BeiDou network device 200 may discard the received MDCP PDU.

After ending the SLC layer session (SLC session) with the terminal 100, if the BeiDou network device 200 receives an SLC PDU sent by the terminal 100, the BeiDou network device 200 starts a new SLC layer session.

In a possible implementation, in the entire application layer packet transmission process, the terminal 100 may set SAI values of all SLC PDUs in a first SLC SDU transmitted at the SLC layer to "0". When a second SLC SDU is transmitted, SAI values of all SLC PDUs in the second SLC SDU are changed to "1". When a third SLC SDU is transmitted, SAI values of all SLC PDUs in the third SLC SDU are changed to "0" again, and so on. In the SLC layer session in the application layer packet transmission process, the BeiDou network device 200 cannot feed back an ACK to the terminal 100 when no SLC PDU is received. Therefore, in the SLC layer session in the application layer packet transmission process, a SAI value of a first SLC PDU received by the BeiDou network device 200 cannot be "1". If the SAI value of the first SLC PDU received by the BeiDou network device 200 in the SLC layer session in the application layer packet transmission process is "1", the BeiDou network device 200 directly discards the SLC PDU.

The following describes a processing procedure in a scenario in which an ACK returned by the BeiDou network device 200 is lost according to an embodiment of this application.

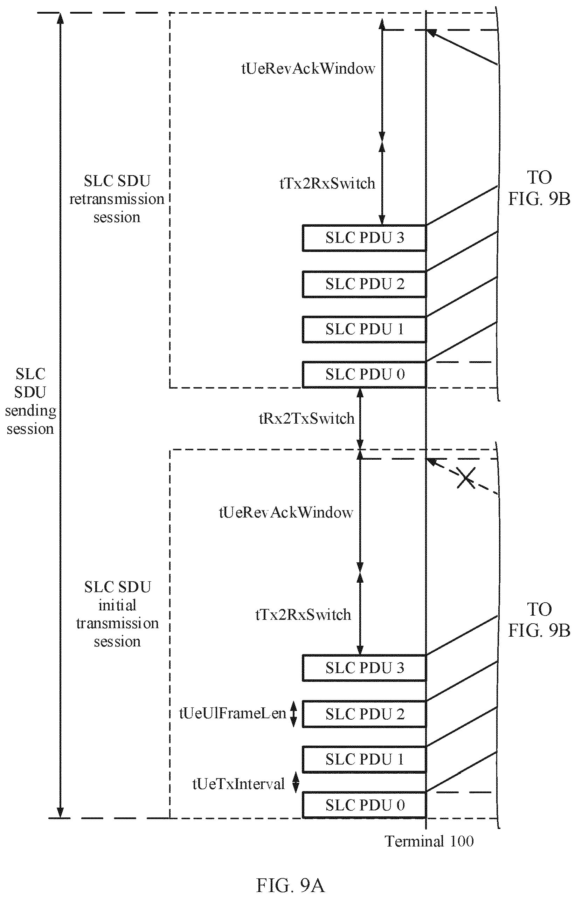

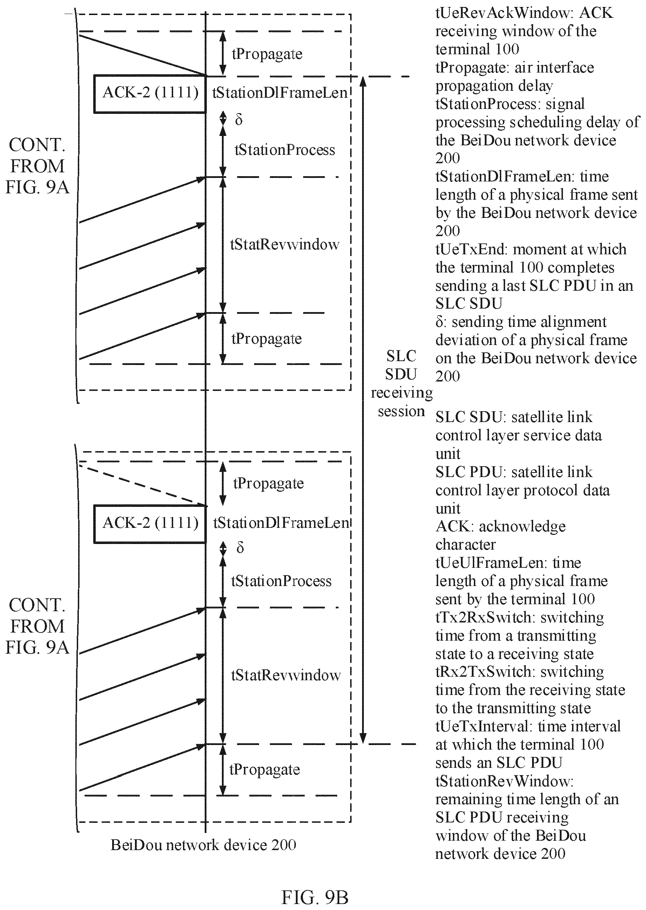

FIG. 9A and FIG. 9B show a processing procedure when an ACK returned by the BeiDou network device 200 is lost according to this embodiment of this application.

As shown in FIG. 9A and FIG. 9B, a processing procedure when a packet loss occurs in the ACK may be as follows:

1. In an SLC SDU initial transmission session (session), the terminal 100 may send N SLC PDUs in an SLC SDU at equal intervals in ascending order of frame sequence numbers. $1 \leq N \leq M$, and M is a maximum quantity of segments of the SLC SDU. In this embodiment of this application, an example in which a value of M is 4 is used for description.

2. After the BeiDou network device 200 receives the SLC PDU sent by the terminal 100, the BeiDou network device 200 may determine a remaining time length (tStatRevwindow) of an SLC PDU receiving window according to the foregoing formula (1). The BeiDou network device 200 may determine, according to the foregoing formula (2), a time point for returning an ACK to the terminal 100.

3. After receiving the N SLC PDUs in the SLC SDU, the BeiDou network device 200 sends an ACK-2 to the terminal 100 at the time point for returning an ACK to the terminal 100.

4. After receiving the N SLC PDUs initially transmitted by the terminal 100, the BeiDou network device 200 may splice the N SLC PDUs into one SLC SDU based on frame sequence numbers.

5. The BeiDou network device 200 may report the spliced SLC SDU from an SLC layer to an MDCP layer through an inter-layer interface, to perform MDCP layer processing. For a processing process of the MDCP layer, refer to the embodiment shown in FIG. 6A and FIG. 6B. Details are not described herein again.

6. The terminal 100 may determine start time and end time of an ACK receiving window according to the foregoing formula (3) and formula (4).

7. Because the ACK-2 is lost, the terminal 100 does not receive, in the ACK receiving window, any ACK sent by the BeiDou network device 200, and the terminal 100 cannot determine whether the BeiDou network device 200 has received the N SLC PDUs sent by the terminal 100. Therefore, after the ACK receiving window ends, the terminal 100 may switch from a receiving state to a transmitting state, start an SLC SDU retransmission session (session), and retransmit the N SLC PDUs.

SAI values of the N SLC PDUs in the SLC SDU retransmission session are the same as SAI values of the N SLC PDUs in the SLC SDU initial transmission session.

8. After receiving the N SLC PDUs retransmitted by the terminal 100, the BeiDou network device 200 may learn, by parsing, that SAI values of the N retransmitted SLC PDUs are the same as SAI values of the N received SLC PDUs. Therefore, the BeiDou network device 200 may determine that the terminal 100 does not receive the sent ACK-2. The BeiDou network device 200 may determine the remaining time length (tStatRevwindow) of the SLC PDU receiving window according to the foregoing formula (1). The BeiDou network device 200 may determine, according to the foregoing formula (2), a time point for returning an ACK to the terminal 100.

9. The BeiDou network device 200 may discard the N SLC PDUs retransmitted by the terminal 100, and resend the ACK-2 to the terminal 100 at the time point for returning an ACK to the terminal 100.

10. In the SLC SDU retransmission session, the terminal 100 may determine the start time and the end time of the ACK receiving window according to the foregoing formula (3) and formula (4).

11. In the SLC SDU retransmission session, the terminal 100 may receive, in the ACK receiving window, the ACK-2 sent by the BeiDou network device 200. After receiving the ACK-2, the terminal 100 may determine that the BeiDou network device 200 has received the N retransmitted SLC PDUs.

For example, in the SLC SDU initial transmission session, the terminal 100 may send four SLC PDUs to the BeiDou network device 200 at equal intervals. The BeiDou network device 200 receives the four initially transmitted SLC PDUs. The BeiDou network device 200 may splice the four initially transmitted SLC PDUs into one SLC SDU based on frame sequence numbers, and report the SLC SDU to the MDCP layer. The BeiDou network device 200 may return the ACK-2 at the time point for returning an ACK. A data part of the ACK-2 occupies 4 bits, a value of the data part of the ACK-2 may be "1111", and the value "1111" indicates that the BeiDou network device 200 has received the four SLC PDUs. Because the ACK-2 is lost, the terminal 100 does not receive, in the ACK receiving window of the SLC SDU initial transmission session, any ACK returned by the BeiDou network device 200. The terminal 100 may start an SLC SDU retransmission session, to retransmit the four SLC PDUs to the BeiDou network device 200. After receiving the four retransmitted SLC PDUs, the BeiDou network device 200 may send the ACK-2 to the terminal 100 at the time point for returning an ACK to the terminal 100, and discard the four retransmitted SLC PDUs. After receiving the ACK-2, the terminal 100 may enter a next SLC SDU sending session, and initially transmit all SLC PDUs in the next SLC SDU.

The foregoing examples are merely used to explain this application and shall not be construed as a limitation.

In a possible implementation, the terminal 100 retransmits N SLC PDUs in an SLC SDU to the BeiDou network device 200. The ACK-2 returned by the BeiDou network device 200 may still be lost. Therefore, after the terminal 100 retransmits the N SLC PDUs in the SLC SDU to the BeiDou network device 200, if no ACK fed back by the BeiDou network device 200 is received in the ACK receiving window of the SLC SDU retransmission session, the terminal 100 may continue to start the SLC SDU retransmission session, to retransmit the N SLC PDUs in the SLC SDU.

Radio transmission resources are considered, and therefore, the terminal 100 cannot retransmit an SLC PDU in an SLC SDU without a limitation. A quantity of times for retransmitting an SLC PDU in an SLC SDU by the terminal 100 needs to be limited to a maximum quantity of retransmission times (MaxReTxNum). Both the terminal 100 and the BeiDou network device 200 may store the maximum quantity of retransmission times (MaxReTxNum).

The terminal 100 may determine, based on the maximum quantity of retransmission times (MaxReTxNum) and a time length of a single SLC SDU session, maximum transmission time of the SLC SDU. When the maximum transmission time of the SLC SDU ends, the terminal 100 no longer sends a retransmitted SLC PDU to the BeiDou network device 200, and may no longer initially transmit a next SLC PDU, to end transmission of an application layer packet in advance.

The BeiDou network device 200 may determine, based on the maximum quantity of retransmission times (MaxReTxNum) and the time length of a single SLC SDU session, the maximum transmission time of the SLC SDU. If the BeiDou network device 200 does not receive a last MDCP PDU of an MDCP SDU at the MDCP layer when the maximum transmission time of the SLC SDU ends, the BeiDou network device 200 may discard a received MDCP PDU sent by the terminal 100.

The following describes a processing procedure in a scenario in which both an SLC PDU and an ACK are lost when data is inbound according to an embodiment of this application.

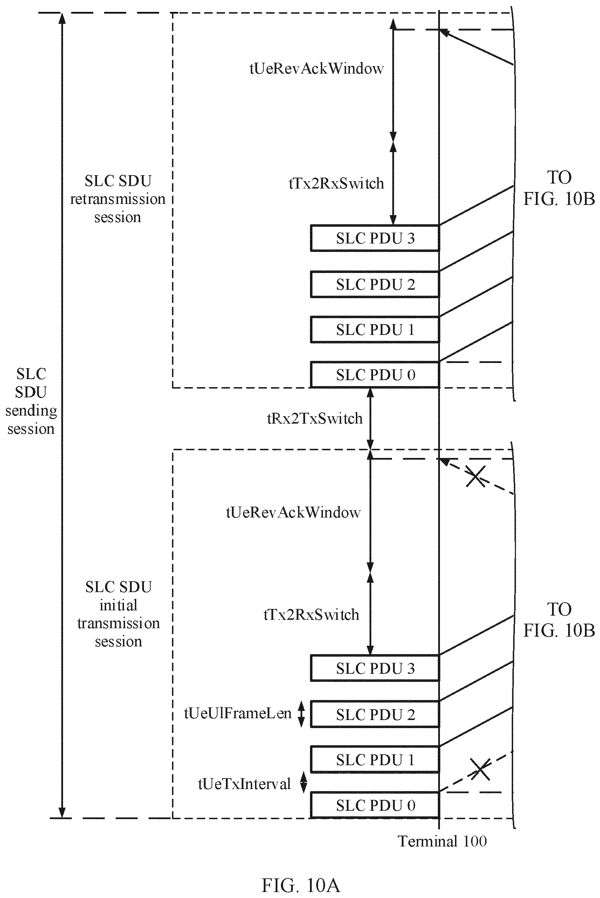

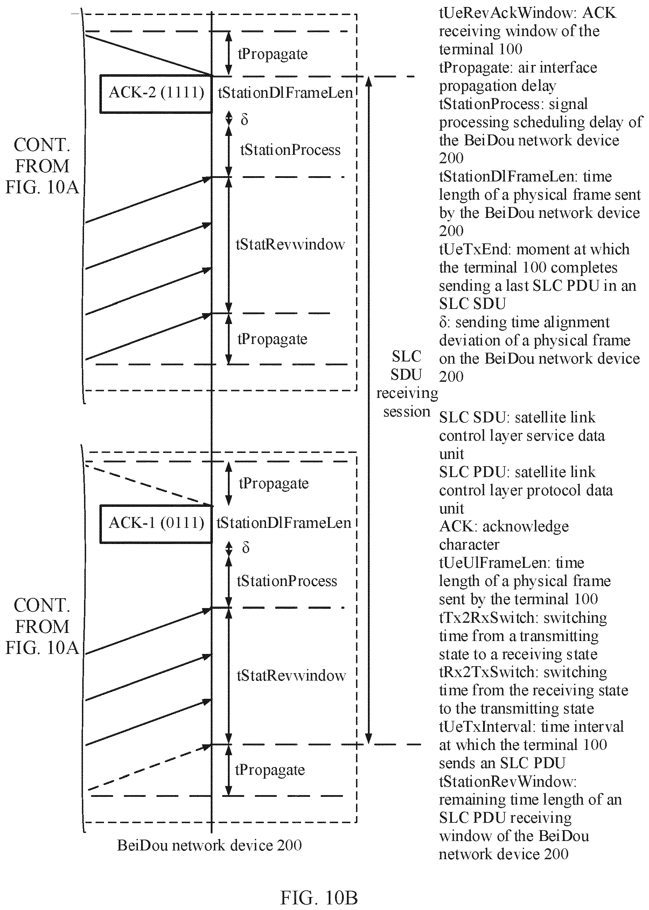

FIG. 10A and FIG. 10B show a processing procedure when both an SLC PDU and an ACK are lost when data is inbound according to this embodiment of this application.

As shown in FIG. 10A and FIG. 10B, a processing procedure when both an SLC PDU and an ACK are lost when data is inbound may be as follows:

1. In an SLC SDU initial transmission session (session), the terminal 100 may send N SLC PDUs in an SLC SDU at equal intervals in ascending order of frame sequence numbers. $1 \leq N \leq M$, and M is a maximum quantity of segments of the SLC SDU. In this embodiment of this application, an example in which a value of M is 4 is used for description.

An $x^{th}$ SLC PDU in the N SLC PDUs is lost in a transmission process, where $0 \leq x \leq N-1$.

2. After receiving the SLC PDU sent by the terminal 100, the BeiDou network device 200 may determine a remaining time length (tStatRevwindow) of an SLC PDU receiving window according to the foregoing formula (1). The BeiDou network device 200 may determine, according to the foregoing formula (2), a time point for returning an ACK to the terminal 100.

3. Because the $x^{th}$ SLC PDU is lost, the BeiDou network device 200 may send an ACK-1 to the terminal 100 at the time point for returning an ACK to the terminal 100. Because the $x^{th}$ SLC PDU is lost, the ACK-1 may indicate that the BeiDou network device 200 does not receive the $x^{th}$ SLC PDU.

4. The terminal 100 may determine start time and end time of an ACK receiving window according to the foregoing formula (3) and formula (4).

5. Because the ACK-1 is lost, the terminal 100 does not receive, in the ACK receiving window, any ACK sent by the BeiDou network device 200, and the terminal 100 cannot determine whether the BeiDou network device 200 has received the N SLC PDUs sent by the terminal 100. Therefore, after the ACK receiving window ends, the terminal 100 may switch from a receiving state to a transmitting state, start an SLC SDU retransmission session (session), and retransmit the N SLC PDUs.

SAI values of the N SLC PDUs in the SLC SDU retransmission session are the same as SAI values of the N SLC PDUs in the SLC SDU initial transmission session.

6. After receiving the N SLC PDUs retransmitted by the terminal 100, the BeiDou network device 200 may learn, by parsing, that SAI values of the N retransmitted SLC PDUs are the same as SAI values of (N-n) received SLC PDUs, where n is a quantity of lost SLC PDUs in the SLC SDU. Therefore, the BeiDou network device 200 may determine that the terminal 100 does not receive the sent ACK-1.

7. The BeiDou network device 200 may obtain, from the N retransmitted SLC PDUs, the n SLC PDUs lost in the SLC SDU initial transmission session and the (N-n) SLC PDUs in the SLC SDU initial transmission session, and splice the n SLC PDUs and the (N-n) SLC PDUs into an SLC SDU.

8. The BeiDou network device 200 may report the spliced SLC SDU from an SLC layer to an MDCP layer through an inter-layer interface, to perform MDCP layer processing. For a processing process of the MDCP layer, refer to the embodiment shown in FIG. 6A and FIG. 6B. Details are not described herein again.

9. The BeiDou network device 200 may determine the remaining time length (tStatRevwindow) of the SLC PDU receiving window according to the foregoing formula (1). The BeiDou network device 200 may determine, according to the foregoing formula (2), a time point for returning an ACK to the terminal 100.

10. When the BeiDou network device 200 determines that all SLC PDUs in the SLC SDU are received, the BeiDou network device 200 may send an ACK-2 to the terminal 100 at the time point for returning an ACK to the terminal 100. The ACK-2 may indicate that the BeiDou network device 200 has received all SLC PDUs in the SLC SDU.

11. In the SLC SDU retransmission session, the terminal 100 may determine the start time and the end time of the ACK receiving window according to the foregoing formula (3) and formula (4).

12. The terminal 100 may receive, in the ACK receiving window, the ACK-2 sent by the BeiDou network device 200. After receiving the ACK-2, the terminal 100 may determine that the BeiDou network device 200 has received all SLC PDUs in the current SLC SDU.

13. After receiving the ACK-2, the terminal 100 may enter a next SLC SDU sending session, and initially transmit all SLC PDUs in the next SLC SDU at equal intervals in ascending order of frame sequence numbers.

For example, in the SLC SDU initial transmission session, the terminal 100 may send four SLC PDUs to the BeiDou network device 200 at equal intervals. The BeiDou network device 200 receives only 1st, 2nd, and 3rd SLC PDUs. The BeiDou network device 200 determines, based on a total quantity of frames and frame sequence numbers that are of the received SLC PDUs, that a 0th SLC PDU is lost. Therefore, the BeiDou network device 200 may send the ACK-1 to the terminal 100 at the time point for returning an ACK. A data part of the ACK-1 occupies 4 bits, a value of the data part of the ACK-1 may be "0111", and the value "0111" indicates that the BeiDou network device 200 does not receive the 0th SLC PDU and has received the 1st, 2nd, and 3rd SLC PDUs. Because the ACK-1 is lost, the terminal 100 does not receive, in the ACK receiving window of the SLC SDU initial transmission session, any ACK returned by the BeiDou network device 200. The terminal 100 may start an SLC SDU retransmission session, to retransmit the four SLC PDUs to the BeiDou network device 200. After receiving the four retransmitted SLC PDUs, the BeiDou network device 200 may send the ACK-2 to the terminal 100 at the time point for returning an ACK to the terminal 100. A data part of the ACK-2 occupies 4 bits, a value of the data part of the ACK-2 may be "1111", and the value "1111" indicates that the BeiDou network device 200 has received all the four SLC PDUs. The BeiDou network device 200 may splice the 0th SLC PDU obtained from the received four retransmitted SLC PDUs and the 1st, 2nd, and 3rd SLC PDUs received in the SLC SDU initial transmission session into one SLC SDU, and report the SLC SDU to the MDCP layer. After receiving the ACK-2, the terminal 100 may enter a next SLC SDU sending session, and initially transmit all SLC PDUs in the next SLC SDU.

The foregoing examples are merely used to explain this application and shall not be construed as a limitation.

In a possible implementation, the terminal 100 initially transmits N SLC PDUs in an SLC SDU to the BeiDou network device 200. In the N initially transmitted SLC PDUs, n1 SLC PDUs are lost, and the BeiDou network device 200 receives only (N-n1) initially transmitted SLC PDUs, where $1 \leq n1 < N$. The BeiDou network device 200 may return an ACK to the terminal 100. The ACK indicates that the BeiDou network device 200 has received frame sequence numbers of the SLC PDUs. The ACK is lost, and the terminal 100 retransmits the N SLC PDUs in the SLC SDU to the BeiDou network device 200. In this case, in the N retransmitted SLC PDUs, n2 SLC PDUs are lost, and the BeiDou network device 200 receives only (N-n2) retransmitted SLC PDUs, where $1 \leq n2 < N$. The BeiDou network device 200 may combine received (N-n1) initially transmitted SLC PDUs by using the received (N-n2) retransmitted SLC PDUs. If an SLC PDU in an SLC SDU after the combination is still missing, the BeiDou network device 200 may continue to return an ACK to the terminal 100, to indicate the terminal 100 to retransmit the missing SLC PDU. If SLC PDUs in the SLC SDU after the combination are complete, the BeiDou network device 200 may splice the N complete SLC PDUs into one SLC SDU and report the SLC SDU to the MDCP layer.

For example, in the SLC SDU initial transmission session, the terminal 100 may send four SLC PDUs to the BeiDou network device 200 at equal intervals. The BeiDou network device 200 receives only 2nd and 3rd SLC PDUs. The BeiDou network device 200 determines, based on a total quantity of frames and frame sequence numbers that are of the received SLC PDUs, that 0th and 1st SLC PDUs are lost. Therefore, the BeiDou network device 200 may send an ACK-3 to the terminal 100 at the time point for returning an ACK. A data part of the ACK-1 occupies 4 bits, a value of the data part of the ACK-3 may be "0011", and the value "0011" indicates that the BeiDou network device 200 does not receive the 0th SLC PDU and has received the 1st, 2nd, and 3rd SLC PDUs. Because the ACK-3 is lost, the terminal 100 does not receive, in the ACK receiving window of the SLC SDU initial transmission session, any ACK returned by the BeiDou network device 200. The terminal 100 may start a first SLC SDU retransmission session, to retransmit the four SLC PDUs to the BeiDou network device 200. A 0th SLC PDU in the first retransmission is lost, and the BeiDou network device 200 receives only 1st, 2nd, and 3rd SLC PDUs in the first retransmission. The BeiDou network device 200 may combine the 1st SLC PDU received in the first retransmission and the 2nd and 3rd SLC PDUs received in the initial transmission, to obtain the 1st, 2nd, and 3rd SLC PDUs, where the 0th SLC PDU is missing. The BeiDou network device 200 may send the ACK-1 to the terminal 100 at the time point for returning an ACK. A value of a data part of the ACK-1 may be "0111", and the value "0111" indicates that the BeiDou network device 200 does not receive the 0th SLC PDU and has received the 1st, 2nd, and 3rd SLC PDUs. After receiving the ACK-1, the terminal 100 may start a second SLC SDU retransmission session, to retransmit the 0th SLC PDU to the BeiDou network device 200. After receiving the 0th SLC PDU, the BeiDou network device 200 may splice the 0th SLC PDU and the received 1st SLC PDU, 2nd SLC PDU, and 3rd SLC PDU into one SLC SDU based on frame sequence numbers, and report the SLC SDU to the MDCP layer. After receiving all SLC PDUs in the SLC SDU, the BeiDou network device 200 may send the ACK-2 to the terminal 100. A data part of the ACK-2 occupies 4 bits, a value of the data part of the ACK-2 may be "1111", and the value "1111" indicates that the BeiDou network device 200 has received all the four SLC PDUs. After receiving the ACK-2, the terminal 100 may enter a next SLC SDU sending session, and initially transmit all SLC PDUs in the next SLC SDU.

The foregoing examples are merely used to explain this application and shall not be construed as a limitation.

The following describes an inbound transmission control method in a BeiDou communication system according to an embodiment of this application.

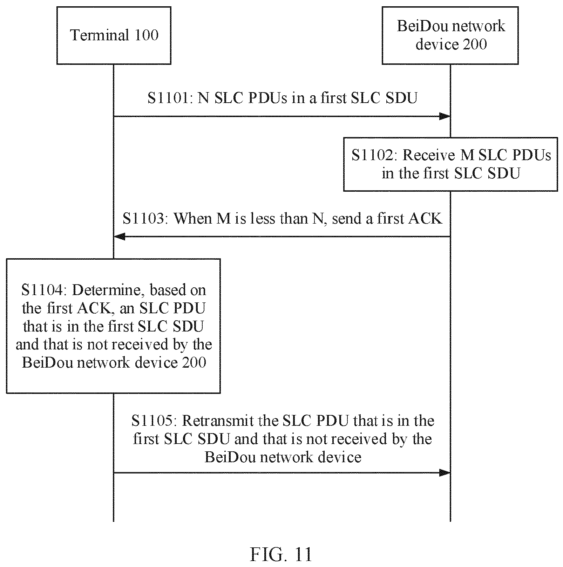

FIG. 11 is a schematic flowchart of an inbound transmission control method in a BeiDou communication system according to this embodiment of this application.

As shown in FIG. 11, the inbound transmission control method in the BeiDou communication system includes the following steps.

S1101: The terminal 100 sends N SLC PDUs in a first SLC SDU to the BeiDou network device 200, where N is a positive integer.

The N SLC PDUs include a first SLC PDU, and frame header information of the first SLC PDU includes a SAI field, a total frame quantity field, and a frame sequence number field. The SAI field indicates whether the first SLC PDU is retransmitted data, the total frame quantity field indicates a total quantity N of SLC PDUs included in the first SLC SDU, and the frame sequence number field indicates a sequence number of the first SLC PDU in the first SLC SDU.

For specific descriptions of the SAI field, the total frame quantity field, and the frame sequence number field, refer to the foregoing embodiments. Details are not described herein again.

S1102: The BeiDou network device 200 receives M SLC PDUs in the first SLC SDU sent by the terminal 100.

S1103: When M is less than N, the BeiDou network device 200 sends a first ACK to the terminal 100.

The first ACK indicates a frame sequence number of an SLC PDU that is in the first SLC SDU and that is not received by the BeiDou network device. The first ACK may be in a form of a bitmap (Bitmap), and each bit in the first N bits of a data part of the first ACK indicates a receiving status of one SLC PDU in the first SLC SDU. For specific descriptions of the ACK fed back by the BeiDou network device 200, refer to the foregoing embodiments. Details are not described herein again.

S1104: The terminal 100 determines, based on the first ACK, the SLC PDU that is in the first SLC SDU and that is not received by the BeiDou network device 200.

For details about how the terminal 100 identifies, based on the ACK fed back by the BeiDou network device 200, the SLC PDU that is not received by the BeiDou network device 200, refer to the foregoing embodiments. Details are not described herein again.

S1105: The terminal 100 retransmits the SLC PDU that is in the first SLC SDU and that is not received by the BeiDou network device 200.

For a specific process of retransmitting the SLC PDU by the terminal 100, refer to the embodiments shown in FIG. 8A to FIG. 10B. Details are not described herein again.

The following describes some possible implementations performed by the terminal 100.

In a possible implementation, after that the terminal 100 sends N SLC PDUs in a first SLC SDU to the BeiDou network device 200, the method further includes: When the terminal 100 receives a second ACK sent by the BeiDou network device 200, the terminal sends one or more SLC PDUs in a second SLC SDU to the BeiDou network device 200. The second ACK indicates that the BeiDou network device has received the N SLC PDUs in the first SLC SDU.

For specific content, refer to the embodiment shown in FIG. 7. Details are not described herein again.

In this way, after the BeiDou network device 200 receives all SLC PDUs in one SLC SDU sent by the terminal 100, the terminal sends all SLC PDUs in a next SLC SDU to the BeiDou network device 200, to maintain continuous data transmission.

In a possible implementation, a value of a SAI field in an SLC PDU in the first SLC SDU is different from a value of a SAI field in an SLC PDU in the second SLC SDU.

For specific functions of the SAI field, refer to the foregoing embodiments. Details are not described herein again.

In this way, whether a value of a SAI field in an SLC PDU is reversed is used to indicate whether the SLC PDU is retransmitted data. This can ensure that the BeiDou network device 200 identifies whether the received SLC PDU is retransmitted data, thereby ensuring continuous data transmission in the BeiDou communication system.

In a possible implementation, after that the terminal 100 sends N SLC PDUs in a first SLC SDU to the BeiDou network device 200, the method further includes: When the terminal 100 does not receive, in an ACK receiving time window after sending the N SLC PDUs in the first SLC SDU to the BeiDou network device 200, an ACK sent by the BeiDou network device 200, the terminal 100 retransmits the N SLC PDUs in the first SLC SDU to the BeiDou network device 200.

For specific content, refer to the embodiment shown in FIG. 9A and FIG. 9B. Details are not described herein again.

In a possible implementation, before that the terminal sends N SLC PDUs in a first SLC SDU to the BeiDou network device, the method further includes: The terminal 100 obtains, at an SLC layer, a plurality of SLC SDUs delivered by an MDCP layer of the terminal 100. The plurality of SLC SDUs include the first SLC SDU and the second SLC SDU. The terminal 100 segments the first SLC SDU into the N SLC PDUs at the SLC layer.

For specific content, refer to the embodiment shown in FIG. 4A and FIG. 4B. Details are not described herein again.

In a possible implementation, before that the terminal 100 obtains, at an SLC layer, a plurality of SLC SDUs delivered by an MDCP layer of the terminal, the method further includes: The terminal 100 obtains, at the MDCP layer, an application layer packet delivered by an application layer of the terminal 100. The terminal 100 uses the application layer packet as an MDCP SDU at the MDCP layer, and segments the MDCP SDU into a plurality of MDCP PDUs after padding data and a redundancy length indicator field are added to the MDCP SDU. The redundancy length indicator field indicates a data length of the padding data, the plurality of MDCP PDUs include a first MDCP PDU, packet header information of the first MDCP PDU includes a succession indicator field, and the succession indicator field indicates a position of the first MDCP PDU in the plurality of MDCP PDUs. The terminal 100 delivers the plurality of MDCP PDUs from the MDCP layer to the SLC layer as the plurality of SLC SDUs at the SLC layer.

For specific content, refer to the embodiment shown in FIG. 4A and FIG. 4B. Details are not described herein again.

In a possible implementation, before that the terminal 100 obtains, at the MDCP layer, an application layer packet delivered by an application layer of the terminal 100, the method further includes: The terminal 100 obtains raw data. The terminal 100 compresses the raw data at the application layer to obtain compressed data. The terminal 100 encrypts the compressed data at the application layer to obtain encrypted data. The terminal 100 adds packet header information to a header of the encrypted data to obtain the application layer packet. The packet header information includes a compression indicator field and an encryption indicator field, the compression indicator field indicates a compression algorithm used when the raw data is compressed, and the encryption indicator field indicates an encryption algorithm used when the compressed data is encrypted.

For specific content, refer to the embodiment shown in FIG. 4A and FIG. 4B. Details are not described herein again.

In a possible implementation, that the terminal 100 sends N SLC PDUs in a first SLC SDU to the BeiDou network device specifically includes: The terminal 100 delivers the first SLC PDU from the SLC layer to a physical PHY layer as a first code block at the PHY layer. The terminal 100 adds check bit information to a tail of the first code block at the PHY layer, and encodes the first code block and the check bit information to obtain first code data. The terminal 100 inserts pilot information into the first code data at the PHY layer, to obtain first pilot data. The terminal 100 modulates the first pilot data and a synchronization header of the first pilot data at the PHY layer, to obtain first modulated data and a first modulated synchronization header. The terminal 100 spreads the first modulated data and the modulated synchronization header at the PHY layer to obtain first spread modulated data. The terminal sends the first spread modulated data to the BeiDou network device at the PHY layer.

For specific content, refer to the embodiment shown in FIG. 4A and FIG. 4B. Details are not described herein again.

In a possible implementation, the terminal 100 determines a start moment of the ACK receiving time window based on a moment at which the terminal 100 completes sending a last SLC PDU in the first SLC SDU, duration of switching the terminal 100 from a transmitting state to a receiving state, an air interface propagation delay, and a signal processing scheduling delay of the BeiDou network device 200.

The terminal 100 starts, at the start moment of the ACK receiving time window, to receive the ACK sent by the BeiDou network device 200.

A formula for determining, by the terminal 100, the start moment of the ACK receiving time window is:

$$tUeTxEnd + tTx2RxSwitch < tUeStartRcvAck$$
$$< tUeTxEnd + 2 * tPropagate + tStationProcess$$

Herein, $tUeStartRcvAck$ is the start moment of the ACK receiving time window; $tUeTxEnd$ is the moment at which the terminal 100 completes sending the last SLC PDU in the first SLC SDU; $tTx2RxSwitch$ is the duration of switching the terminal 100 from the transmitting state to the receiving state; $tPropagate$ is the air interface propagation delay; and $tStationProcess$ is the signal processing scheduling delay of the BeiDou network device 200.

For specific content, refer to the embodiment shown in FIG. 7. Details are not described herein again.

In a possible implementation, the terminal 100 determines an end moment of the ACK receiving time window based on a time length of a physical frame sent by the terminal 100, an air interface propagation delay, a signal processing scheduling delay of the BeiDou network device 200, a time length of a physical frame sent by the BeiDou network device 200, and a time alignment deviation of sending the physical frame by the BeiDou network device 200. The terminal 100 stops, at the end moment of the ACK receiving time window, receiving the ACK sent by the BeiDou network device 200.

A formula for determining, by the terminal 100, the end moment of the ACK receiving time window is:

$$tUeEndRcvAck =$$
$$tUeTxEnd + tUeUlFrameLen + 2 * tPropagate + tStationProcess +$$
$$tStationDlFrameLen + \delta$$

Herein, $tUeEndRcvAck$ is the end moment of the ACK receiving time window, $tUeUlFrameLen$ is the time length of the physical frame sent by the terminal 100, $tPropagate$ is the air interface propagation delay, $tStationProcess$ is the signal processing scheduling delay of the BeiDou network device 200, $tStationDlFrameLen$ is the time length of the physical frame sent by the BeiDou network device 200, and $\delta$ is the time alignment deviation of sending the physical frame by the BeiDou network device 200.

The following describes some possible implementations performed by the BeiDou network device 200.

In a possible implementation, after the BeiDou network device 200 receives the M SLC PDUs in the first SLC SDU sent by the terminal 100, the BeiDou network device 200 sends the second ACK to the terminal 100 when M is equal to N. The second ACK indicates that the BeiDou network device has received the N SLC PDUs in the first SLC SDU. The BeiDou network device 200 receives one or more SLC PDUs in the second SLC SDU sent by the terminal 100.

For specific content, refer to the embodiment shown in FIG. 7. Details are not described herein again.

In this way, after the BeiDou network device 200 receives all SLC PDUs in one SLC SDU sent by the terminal 100, the terminal sends all SLC PDUs in a next SLC SDU to the BeiDou network device 200, to maintain continuous data transmission.

In a possible implementation, a value of a SAI field in an SLC PDU in the second SLC SDU is different from a value of a SAI field in an SLC PDU in the first SLC SDU.

For specific functions of the SAI field, refer to the foregoing embodiments. Details are not described herein again.

In this way, whether a value of a SAI field in an SLC PDU is reversed is used to indicate whether the SLC PDU is retransmitted data. This can ensure that the BeiDou network device 200 identifies whether the received SLC PDU is retransmitted data, thereby ensuring continuous data transmission in the BeiDou communication system.

In a possible implementation, that the BeiDou network device receives M SLC PDUs in the first SLC SDU sent by the terminal specifically includes: The BeiDou network device 200 obtains, at the PHY layer, first spread modulated data sent by the terminal 100. The BeiDou network device 200 despreads the first spread modulated data at the PHY layer, to obtain first modulated data and a first modulated synchronization header. The BeiDou network device 200 demodulates the first modulated data and the first modulated synchronization header at the PHY layer, to obtain first pilot data and a first synchronization header. The BeiDou network device 200 removes pilot information in the first pilot data at the PHY layer to obtain first code data. The BeiDou network device 200 decodes the first code data at the PHY layer to obtain a first code block and first check information. The BeiDou network device 200 checks the first code block at the PHY layer based on the first check information, and after the check succeeds, delivers the first code block from the PHY layer to an SLC layer of the BeiDou network device as the first SLC PDU in the first SLC SDU at the SLC layer of the BeiDou network device 200.

For specific content, refer to the embodiment shown in FIG. 5A and FIG. 5B. Details are not described herein again.

In a possible implementation, after that the BeiDou network device 200 receives M SLC PDUs in the first SLC SDU sent by the terminal 100, the method further includes: The BeiDou network device 200 splices the M SLC PDUs into the first SLC SDU at the SLC layer, and reports the first SLC SDU from the SLC layer of the BeiDou network device to an MDCP layer of the BeiDou network device as a first MDCP PDU at the MDCP layer, where packet header information of the first MDCP PDU includes a succession indicator field, and the succession indicator field indicates a position of the first MDCP PDU in a plurality of MDCP PDUs sent by the terminal 100.

For specific content, refer to the embodiment shown in FIG. 5A and FIG. 5B. Details are not described herein again.

In a possible implementation, the method further includes: The BeiDou network device 200 obtains, at the MDCP layer, a second MDCP PDU reported from the SLC layer of the BeiDou network device 200.

When a succession indicator field in the second MDCP PDU indicates that the second MDCP PDU is the last of the plurality of MDCP PDUs sent by the terminal 100, the BeiDou network device 200 splices, at the MDCP layer, the first MDCP PDU and the second MDCP PDU into an MDCP SDU, and reports the MDCP SDU from the MDCP layer to the application layer as an application layer packet.

For specific content, refer to the embodiment shown in FIG. 5A and FIG. 5B. Details are not described herein again.

In a possible implementation, the application layer packet includes packet header information and encrypted data, the packet header information includes an encryption indicator field and a compression indicator field, the compression indicator field indicates a compression algorithm used when the terminal 100 compresses raw data into compressed data, and the encryption indicator field indicates an encryption algorithm used when the terminal 100 encrypts the compressed data into the encrypted data.

The method further includes: The BeiDou network device 200 decrypts, at the application layer, the encrypted data in the application layer packet by using the encryption algorithm indicated by the encryption indicator field in the application layer packet, to obtain the compressed data. The BeiDou network device decompresses, at the application layer, the compressed data by using the compression algorithm indicated by the compression indicator field in the application layer packet, to obtain the raw data.

For specific content, refer to the embodiment shown in FIG. 5A and FIG. 5B. Details are not described herein again.

In a possible implementation, the BeiDou network device 200 determines a remaining time length of an SLC PDU receiving window based on a frame sequence number of the received first SLC PDU in the first SLC SDU, the total quantity of SLC PDUs in the first SLC SDU, a receiving moment of the first SLC PDU, a frame interval at which the terminal 100 sends a physical frame, and a time length of the physical frame sent by the terminal 100.

The BeiDou network device 200 determines the remaining time length of the SLC PDU receiving window by using the following formula:

$$tStationRevWindow = tStatRevRctSP +$$

$$(nUeTotalFrameNum - nRevFrameSN - 1) * (tUeTxInterval + tUeUlFrameLen)$$

Herein, tStationRevWindow is the remaining time length of the SLC PDU receiving window, tStatRevRctSP is the receiving moment of the first SLC PDU, nUeTotalFrameNum is the total quantity of SLC PDUs in the first SLC SDU, nRevFrameSN is the frame sequence number of the first SLC PDU, tUeTxInterval is the frame interval at which the terminal 100 sends a physical frame, and tUeUlFrameLen is the time length of the physical frame sent by the terminal 100.

For specific content, refer to the embodiment shown in FIG. 7. Details are not described herein again.

In a possible implementation, the method further includes: The BeiDou network device 200 determines, based on the remaining time length of the SLC PDU receiving window and a signal processing scheduling delay of the BeiDou network device 200, a time point for sending an ACK.

The BeiDou network device 200 determines, by using the following formula, the time point for sending the ACK:

$$tStationSendAck =$$

$$tStationRevWindow + tStationProcess + \delta$$

Herein, tStationSendAck is the time point at which the BeiDou network device 200 sends the ACK, tStation-RevWindow is the remaining time length of the SLC PDU receiving window, tStationProcess is the signal processing scheduling delay of the BeiDou network device 200, and $\delta$ is a sending time alignment deviation of an outbound physical frame on the BeiDou network device 200.

For specific content, refer to the embodiment shown in FIG. 7. Details are not described herein again.

According to the inbound transmission control method in the BeiDou communication system according to this embodiment of this application, the terminal 100 may send the N SLC PDUs in the first SLC PDU to the BeiDou network device 200. If the BeiDou network device 200 determines, based on frame header information of a received SLC PDU, that an SLC PDU in the first SLC SDU is missing, the BeiDou network device 200 returns a first ACK to the terminal. The first ACK indicates a frame sequence number of an SLC PDU that is in the first SLC SDU and that is not received by the BeiDou network device. After receiving the first ACK from the BeiDou network device 200, the terminal 100 retransmits, to the BeiDou network device 200, the SLC PDU that is in the first SLC SDU and that is not received by the BeiDou network device 200. In this way, when data sent by the terminal 100 is lost, a normal data transmission process is ensured.

The foregoing content describes in detail the methods provided in this application. To better implement the foregoing solutions in embodiments of this application, embodiments of this application further provide corresponding apparatuses or devices.

In embodiments of this application, the terminal 100 may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

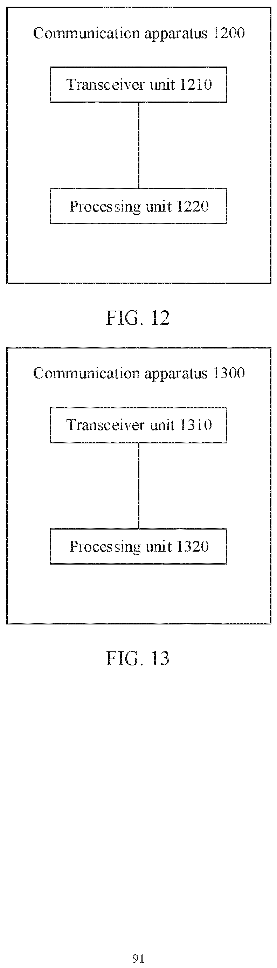

The following describes in detail communication apparatuses in embodiments of this application with reference to FIG. 12 to FIG. 15.

When an integrated unit is used, FIG. 12 is a schematic diagram of a structure of a communication apparatus 1200 according to an embodiment of this application. The communication apparatus 1200 may be the terminal 100 in the foregoing embodiments. Optionally, the communication apparatus 1200 may be a chip/chip system, for example, a BeiDou communication chip. As shown in FIG. 12, the communication apparatus 1200 may include a transceiver unit 1210 and a processing unit 1220.

In a design, the transceiver unit 1210 may be configured to send N SLC PDUs in a first SLC SDU to the BeiDou network device 200, where N is a positive integer. The N SLC PDUs include a first SLC PDU, and frame header information of the first SLC PDU includes a SAI field, a total frame quantity field, and a frame sequence number field. The SAI field indicates whether the first SLC PDU is retransmitted data, the total frame quantity field indicates a total quantity N of SLC PDUs included in the first SLC SDU, and the frame sequence number field indicates a sequence number of the first SLC PDU in the first SLC SDU.

The transceiver unit 1210 is further configured to receive a first ACK returned by the BeiDou network device 200. The first ACK indicates a frame sequence number of an SLC PDU that is in the first SLC SDU and that is not received by the BeiDou network device.

The processing unit 1220 may be configured to determine, based on the first ACK, the SLC PDU that is in the first SLC SDU and that is not received by the BeiDou network device 200.

The transceiver unit 1210 is further configured to retransmit, to the BeiDou network device 200, the SLC PDU that is in the first SLC SDU and that is not received by the BeiDou network device 200.

Optionally, the transceiver unit 1210 may be further configured to perform functional steps that are performed by the terminal 100 and that are related to sending and receiving in the method embodiment shown in FIG. 11.

Optionally, the processing unit 1220 may be further configured to perform functional steps that are performed by the terminal 100 and that are related to protocol parsing and encapsulation and operation determining in the method embodiment shown in FIG. 11.

It should be understood that the communication apparatus 1200 in this design may correspondingly perform the method steps performed by the terminal 100 in the foregoing embodiments. For brevity, details are not described herein again.

When an integrated unit is used, FIG. 13 is a schematic diagram of a structure of a communication apparatus 1300 according to an embodiment of this application. The communication apparatus 1300 may be the BeiDou network device 200 in the foregoing embodiments. Optionally, the communication apparatus 1300 may be a specific network element in the BeiDou network device 200, for example, one network element or a combination of a plurality of network elements in the BeiDou ground transceiver station 22, the BeiDou central station 23, and the BeiDou short packet integrated communication platform 24. As shown in FIG. 13, the communication apparatus 1300 may include a transceiver unit 1310 and a processing unit 1320.

In a design, the transceiver unit 1310 may be configured to receive M SLC PDUs in a first SLC SDU sent by the terminal 100, where M is a positive integer, the M SLC PDUs include a first SLC PDU, frame header information of the first SLC PDU includes a SAI field, a total frame quantity field, and a frame sequence number field, the SAI field indicates whether the SLC PDU is retransmitted data, the total frame quantity field indicates a total quantity N of SLC PDUs included in the first SLC SDU, N is a positive integer, and the frame sequence number field indicates a frame sequence number of the first SLC PDU in the first SLC SDU.

The processing unit 1320 may be configured to generate a first ACK based on frame header information of the M received SLC PDUs.

The transceiver unit 1310 is further configured to send the first ACK to the terminal 100 when M is less than N, where the first ACK indicates a frame sequence number of an SLC PDU that is not received in the first SLC SDU.

Optionally, the transceiver unit 1310 may be further configured to perform functional steps that are performed by the BeiDou network device 200 and that are related to sending and receiving in the method embodiment shown in FIG. 11.

Optionally, the processing unit 1320 may be further configured to perform functional steps that are performed by the BeiDou network device 200 and that are related to protocol parsing and encapsulation and operation determining in the method embodiment shown in FIG. 11.

It should be understood that the communication apparatus 1300 in this design may correspondingly perform the method steps performed by the BeiDou network device 200 in the foregoing embodiments. For brevity, details are not described herein again.

The terminal 100 and the BeiDou network device 200 in embodiments of this application are described above. It should be understood that any product in any form that has a function of the terminal 100 in FIG. 12 or any product in any form that has a function of the BeiDou network device 200 in FIG. 13 shall fall within the protection scope of embodiments of this application.

In a possible product form, the terminal 100 in embodiments of this application may be implemented by using a general bus architecture.

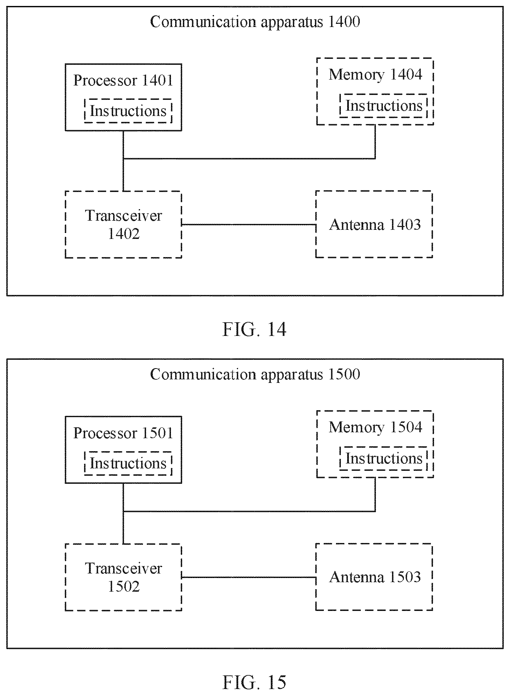

FIG. 14 is a schematic diagram of a structure of a communication apparatus 1400 according to an embodiment of this application. The communication apparatus 1400 may be the terminal 100 or an apparatus in the terminal 100. As shown in FIG. 14, the communication apparatus 1400 includes a processor 1401 and a transceiver 1402 that is internally connected to and communicates with the processor. The processor 1401 is a general-purpose processor, a dedicated processor, or the like. For example, the processor 1401 may be a baseband processor for satellite communication or a central processing unit. The baseband processor for satellite communication may be configured to process a satellite communication protocol and satellite communication data. The central processing unit may be configured to: control a communication apparatus (for example, a baseband chip, a terminal, or a terminal chip), execute a computer program, and process data of the computer program. The transceiver 1402 may be referred to as a transceiver unit, a transceiver machine, a transceiver circuit, or the like, and is configured to implement a transceiver function. The transceiver 1402 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1400 may further include an antenna 1403 and/or a radio frequency unit (not shown in the figure). The antenna 1403 and/or the radio frequency unit may be located inside the communication apparatus 1400, or may be separated from the communication apparatus 1400. In other words, the antenna 1403 and/or the radio frequency unit may be deployed remotely or in a distributed manner.

Optionally, the communication apparatus 1400 may include one or more memories 1404. The memory 1404 may store instructions. The instructions may be a computer program. The computer program may be run on the communication apparatus 1400, so that the communication apparatus 1400 performs the methods described in the foregoing method embodiments. Optionally, the memory 1404 may further store data. The communication apparatus 1400 and the memory 1404 may be separately disposed, or may be integrated.

The processor 1401, the transceiver 1402, and the memory 1404 may be connected through a communication bus.

In a design, the communication apparatus 1400 may be configured to perform a function of the terminal 100 in the foregoing embodiment. The processor 1401 may be configured to perform functional steps that are performed by the terminal 100 and that are related to protocol parsing and encapsulation and operation determining in the embodiment shown in FIG. 11 and/or another process in the technology described in this specification. The transceiver 1402 may be configured to perform functional steps that are performed by the terminal 100 and that are related to sending and receiving in the embodiment shown in FIG. 11 and/or another process in the technology described in this specification.

In any one of the foregoing designs, the processor 1401 may include a transceiver configured to implement the receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1401 may store instructions. The instructions may be a computer program. The computer program is run on the processor 1401, so that the communication apparatus 1400 can perform the method steps performed by the terminal 100 in the foregoing method embodiments. The computer program may be fixed in the processor 1400. In this case, the processor 1401 may be implemented by hardware.

In an implementation, the communication apparatus 1400 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 14. The communication apparatus 1400 may be an independent device or may be a part of a large device. For example, the communication apparatus 1400 may be:

(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver machine, a terminal, an intelligent terminal, a cellular phone, a wireless device, a handheld device, a mobile unit, a vehicle-mounted device, a network device, a cloud device, or an artificial intelligence device; or
(6) others.

In a possible product form, any network element (for example, the BeiDou ground transceiver station 22, the BeiDou central station 23, and the BeiDou short packet integrated communication platform 24) in the BeiDou network device 200 in embodiments of this application may be implemented by using a general bus architecture.

FIG. 15 is a schematic diagram of a structure of a communication apparatus 1500 according to an embodiment of this application. The communication apparatus 1500 may be the BeiDou network device 200 or an apparatus in the BeiDou network device 200. As shown in FIG. 15, the communication apparatus 1500 includes a processor 1501 and a transceiver 1502 that is internally connected to and communicates with the processor. The processor 1501 is a general-purpose processor, a dedicated processor, or the like. For example, the processor 1501 may be a baseband processor for satellite communication or a central processing unit. The baseband processor for satellite communication may be configured to process a satellite communication protocol and satellite communication data. The central processing unit may be configured to: control a communication apparatus (for example, a baseband chip), execute a computer program, and process data of the computer program. The transceiver 1502 may be referred to as a transceiver unit, a transceiver machine, a transceiver circuit, or the like, and is configured to implement a transceiver function. The transceiver 1502 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1500 may further include an antenna 1503 and/or a radio frequency unit (not shown in the figure). The antenna 1503 and/or the radio frequency unit may be located inside the communication apparatus 1500, or may be separated from the communication apparatus 1500. In other words, the antenna 1503 and/or the radio frequency unit may be deployed remotely or in a distributed manner.

Optionally, the communication apparatus 1500 may include one or more memories 1504. The memory 1504 may store instructions. The instructions may be a computer program. The computer program may be run on the communication apparatus 1500, so that the communication apparatus 1500 performs the methods described in the foregoing method embodiments. Optionally, the memory 1504 may further store data. The communication apparatus 1500 and the memory 1504 may be separately disposed, or may be integrated.

The processor 1501, the transceiver 1502, and the memory 1504 may be connected through a communication bus.

In a design, the communication apparatus 1500 may be configured to perform a function of the BeiDou network device 200 in the foregoing embodiment. The processor 1501 may be configured to perform functional steps that are performed by the BeiDou network device 200 and that are related to protocol parsing and encapsulation and operation determining in the embodiment shown in FIG. 11 and/or another process in the technology described in this specification. The transceiver 1502 may be configured to perform functional steps that are performed by the BeiDou network device 200 and that are related to sending and receiving in the embodiment shown in FIG. 11 and/or another process in the technology described in this specification.

In any one of the foregoing designs, the processor 1501 may include a transceiver configured to implement the receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1501 may store instructions. The instructions may be a computer program. The computer program is run on the processor 1501, so that the communication apparatus 1500 can perform the method steps performed by the terminal 100 in the foregoing method embodiments. The computer program may be fixed in the processor 1500. In this case, the processor 1501 may be implemented by hardware.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a BeiDou communication system, including the terminal 100 and the BeiDou network device 200. The terminal 100 and the BeiDou network device 200 may perform the method in any one of the foregoing embodiments.

In this application, a short packet communication function in the BeiDou communication system is described. It may be understood that the short packet communication function may also be supported in another satellite system. Therefore, not limited to the BeiDou communication system, if another satellite system also supports the short packet communication function, the method described in this application is also applicable to communication of the another satellite system.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

Persons skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another place. The storage medium may be any available medium accessible to a general-purpose or dedicated computer.

## Claims

1. An inbound transmission control method in a satellite communication system which supports a short packet communication function, comprising:

   sending (S1101), by a terminal (100), N satellite link control protocol data units SLC PDUs in a first satellite link control service data unit SLC SDU to a satellite network device, wherein N is a positive integer, the N SLC PDUs comprise a first SLC PDU, frame header information of the first SLC PDU comprises a service data unit alternated indicator SAI field, a total frame quantity field, and a frame sequence number field, the SAI field indicates whether the first SLC PDU is retransmitted data, the total frame quantity field indicates a total quantity N of SLC PDUs comprised in the first SLC SDU, and the frame sequence number field indicates a frame sequence number of the first SLC PDU in the first SLC SDU; and

when the terminal (100) receives a first acknowledge character ACK sent by the satellite network device, retransmitting (S1104), by the terminal (100) to the satellite network device, an SLC PDU that is in the first SLC SDU and that is not received by the satellite network device, wherein the first ACK indicates a frame sequence number of the SLC PDU that is in the first SLC SDU and that is not received by the satellite network device.

2. The method according to claim 1, wherein after the sending (S1101), by a terminal (100), N SLC PDUs in a first SLC SDU to a satellite network device, the method further comprises:
when the terminal (100) receives a second ACK sent by the satellite network device, sending, by the terminal (100), one or more SLC PDUs in a second SLC SDU to the satellite network device, wherein the second ACK indicates that the satellite network device has received the N SLC PDUs in the first SLC SDU.

3. The method according to claim 2, wherein a value of a SAI field in an SLC PDU in the second SLC SDU is different from a value of a SAI field in an SLC PDU in the first SLC SDU.

4. The method according to claim 1, wherein after the sending (S1101), by a terminal (100), N SLC PDUs in a first SLC SDU to a satellite network device, the method further comprises:
when the terminal (100) does not receive, in an ACK receiving time window after the N SLC PDUs in the first SLC SDU are sent to the satellite network device, an ACK sent by the satellite network device, retransmitting, by the terminal (100), the N SLC PDUs in the first SLC SDU to the satellite network device.

5. The method according to any one of claims 1 to 4, wherein before the sending (S1101), by a terminal (100), N SLC PDUs in a first SLC SDU to a satellite network device, the method further comprises:

obtaining, by the terminal (100) at a satellite link control SLC layer, a plurality of SLC SDUs delivered by a message data convergence protocol MDCP layer of the terminal (100), wherein the plurality of SLC SDUs comprise the first SLC SDU and the second SLC SDU; and
segmenting, by the terminal (100), the first SLC SDU into the N SLC PDUs at the SLC layer.

6. The method according to claim 5, wherein before the obtaining, by the terminal (100) at an SLC layer, a plurality of SLC SDUs delivered by an MDCP layer of the terminal (100), the method further comprises:

obtaining, by the terminal (100) at the MDCP layer, an application layer packet delivered by an application layer of the terminal (100);
using, by the terminal (100), the application layer packet as an MDCP SDU at the MDCP layer, and segmenting the MDCP SDU into a plurality of MDCP PDUs after padding data and a redundancy length indicator field are added to the MDCP SDU, wherein the redundancy length indicator field indicates a data length of the padding data, the plurality of MDCP PDUs comprise a first MDCP PDU, packet header information of the first MDCP PDU comprises a succession indicator field, and the succession indicator field indicates a position of the first MDCP PDU in the plurality of MDCP PDUs; and
delivering, by the terminal (100), the plurality of MDCP PDUs from the MDCP layer to the SLC layer as the plurality of SLC SDUs at the SLC layer.

7. The method according to claim 6, wherein before the obtaining, by the terminal (100) at the MDCP layer, an application layer packet delivered by an application layer of the terminal (100), the method further comprises:

obtaining, by the terminal (100), raw data;
compressing, by the terminal (100), the raw data at the application layer to obtain compressed data;
encrypting, by the terminal (100), the compressed data at the application layer to obtain encrypted data; and
adding, by the terminal (100), packet header information to a header of the encrypted data to obtain the application layer packet, wherein the packet header information comprises a compression indicator field and an encryption indicator field, the compression indicator field indicates a compression algorithm used when the raw data is compressed, and the encryption indicator field indicates an encryption algorithm used when the compressed data is encrypted.

8. The method according to any one of claims 1 to 7, wherein the sending (S1101), by a terminal (100), N SLC PDUs in a first SLC SDU to a satellite network device specifically comprises:

delivering, by the terminal (100), the first SLC PDU from the SLC layer to a physical PHY layer as a first code block at the PHY layer;

adding, by the terminal (100), check bit information to a tail of the first code block at the PHY layer, and encoding the first code block and the check bit information to obtain first code data;

inserting, by the terminal (100), pilot information into the first code data at the PHY layer, to obtain first pilot data;

modulating, by the terminal (100), the first pilot data and a synchronization header of the first pilot data at the PHY layer, to obtain first modulated data and a first modulated synchronization header;

spreading, by the terminal (100), the first modulated data and the modulated synchronization header at the PHY layer to obtain first spread modulated data; and

sending, by the terminal (100), the first spread modulated data to the satellite network device at the PHY layer.

9. The method according to any one of claims 1 to 8, wherein the method further comprises:

determining, by the terminal (100), a start moment of the ACK receiving time window based on a moment at which the terminal (100) completes sending a last SLC PDU in the first SLC SDU, duration of switching the terminal (100) from a transmitting state to a receiving state, an air interface propagation delay, and a signal processing scheduling delay of the satellite network device; and

starting, by the terminal (100) at the start moment of the ACK receiving time window, to receive the ACK sent by the satellite network device.

10. The method according to claim 9, wherein a formula for determining, by the terminal (100), the start moment of the ACK receiving time window is:

$$tUeTxEnd + tTx2RxSwitch < tUeStartRcvAck < tUeTxEnd + 2 * tPropagate + tStationProcess,$$

wherein

$tUeStartRcvAck$ is the start moment of the ACK receiving time window, $tUeTxEnd$ is the moment at which the terminal (100) completes sending the last SLC PDU in the first SLC SDU, $tTx2RxSwitch$ is the duration of switching the terminal (100) from the transmitting state to the receiving state, $tPropagate$ is the air interface propagation delay, and $tStationProcess$ is the signal processing scheduling delay of the satellite network device.

11. The method according to any one of claims 1 to 8, wherein the method further comprises:

determining, by the terminal (100), an end moment of the ACK receiving time window based on a time length of a physical frame sent by the terminal (100), an air interface propagation delay, a signal processing scheduling delay of the satellite network device, a time length of a physical frame sent by the satellite network device, and a time alignment deviation of sending the physical frame by the satellite network device; and

stopping, by the terminal (100) at the end moment of the ACK receiving time window, receiving the ACK sent by the satellite network device.

12. The method according to claim 11, wherein a formula for determining, by the terminal (100), the end moment of the ACK receiving time window is:

$$tUeEndRcvAck =$$
$$tUeTxEnd + tUeUlFrameLen + 2 * tPropagate + tStationProcess +$$
$$tStationDlFrameLen + \delta, \text{ wherein}$$

$tUeEndRcvAck$ is the end moment of the ACK receiving time window, $tUeUlFrameLen$ is the time length of the physical frame sent by the terminal (100), $tPropagate$ is the air interface propagation delay, $tStationProcess$ is the signal processing scheduling delay of the satellite network device, $tStationDlFrameLen$ is the time length of the physical frame sent by the satellite network device, and $\delta$ is the time alignment deviation of sending the physical frame by the satellite network device.

13. A communication apparatus (1400; 1500), comprising one or more processors (1401;1501), one or more memories (1404; 1504), and a transceiver (1402; 1502), wherein the transceiver (1402; 1502) and the one or more memories (1404; 1504) are coupled to the one or more processors (1401; 1501), the one or more memories (1404; 1504) are configured to store computer program code, the computer program code comprises computer instructions, and when the one or more processors (1401; 1501) execute the computer instructions, the communication apparatus (1400; 1500) is enabled to perform the method according to any one of claims 1 to 12.

14. A computer-readable storage medium, wherein the computer-readable storage medium stores instructions, and when the instructions are run on a computer, the computer is enabled to perform the method according to any one of claims 1 to 12.

15. A chip or a chip system, applied to a terminal (100), and comprising a processing circuit and an interface circuit, wherein the interface circuit is configured to receive code instructions and transmit the code instructions to the processing circuit, and the processing circuit is configured to run the code instructions to perform the method according to any one of claims 1 to 12.

**Patentansprüche**

1. Verfahren zur Steuerung von eingehender Übertragung in einem Satellitenkommunikationssystem, welches eine Kurzpaketkommunikationsfunktion unterstützt, umfassend:

   Senden (S1101) von N Protokolldateneinheiten zur Steuerung von Satellitenverbindungen SLC PDUs in einer ersten Servicedateneinheit zur Steuerung von Satellitenverbindungen SLC SDU durch ein Endgerät (100) an eine Satellitennetzwerkvorrichtung, wobei N eine positive ganze Zahl ist, die N SLC PDUs eine erste SLC PDU umfassen, Frame-Header-Informationen der ersten SLC PDU ein Wechselanzeigefeld, SAI-Feld, für Dienstdateneinheiten, ein Feld für die Gesamtmenge von Frames und ein Feld für Frame-Sequenznummern umfassen, das SAI-Feld anzeigt, ob die erste SLC PDU neuübertragene Daten ist, das Feld für die Gesamtmenge von Frames eine Gesamtmenge N von SLC PDUs anzeigt, die in der ersten SLC SDU enthalten sind, und das Feld für Frame-Sequenznummern eine Frame-Sequenznummer der ersten SLC PDU in der ersten SLC SDU anzeigt; und
   wenn das Endgerät (100) ein erstes Bestätigungszeichen ACK empfängt, das durch die Satellitennetzwerkvorrichtung gesendet wird, Neuübertragen (S1104) einer SLC PDU, die in der ersten SLC SDU vorliegt und die nicht durch die Satellitennetzwerkvorrichtung empfangen wurde, durch das Endgerät (100) an die Satellitennetzwerkvorrichtung, wobei das erste ACK eine Frame-Sequenznummer der SLC PDU anzeigt, die in der ersten SLC SDU vorliegt und die nicht durch die Satellitennetzwerkvorrichtung empfangen wurde.

2. Verfahren nach Anspruch 1, wobei das Verfahren nach dem Senden (S1101) von N SLC PDUs in einer ersten SLC SDU durch ein Endgerät (100) an eine Satellitennetzwerkvorrichtung ferner Folgendes umfasst:
   wenn das Endgerät (100) ein zweites ACK empfängt, das durch die Satellitennetzwerkvorrichtung gesendet wird, Senden einer oder mehrerer SLC PDUs in einer zweiten SLC SDU durch das Endgerät (100) an die Satellitennetzwerkvorrichtung, wobei das zweite ACK anzeigt, dass die Satellitennetzwerkvorrichtung die N SLC PDUs in der ersten SLC SDU empfangen hat.

3. Verfahren nach Anspruch 2, wobei sich ein Wert eines SAI-Felds in einer SLC PDU in der zweiten SLC SDU von einem Wert eines SAI-Felds in einer SLC PDU in der ersten SLC SDU unterscheidet.

4. Verfahren nach Anspruch 1, wobei das Verfahren nach dem Senden (S1101) von N SLC PDUs in einer ersten SLC SDU durch ein Endgerät (100) an eine Satellitennetzwerkvorrichtung ferner Folgendes umfasst:
   wenn das Endgerät (100) in einem ACK-Empfangszeitfenster, nachdem die N SLC PDUs in der ersten SLC SDU an die Satellitennetzwerkvorrichtung gesendet wurden, kein durch die Satellitennetzwerkvorrichtung gesendetes ACK empfängt, Neuübertragen der N SLC PDUs in der ersten SLC SDU durch das Endgerät (100) an die Satellitennetzwerkvorrichtung.

5. Verfahren nach einem der Ansprüche 1 bis 4, wobei das Verfahren vor dem Senden (S1101) von N SLC PDUs in einer ersten SLC SDU durch ein Endgerät (100) an eine Satellitennetzwerkvorrichtung ferner Folgendes umfasst:

   Erlangen einer Vielzahl von SLC SDUs durch das Endgerät (100) auf einer Schicht zur Satellitenverbindungssteuerung, SLC-Schicht, die durch eine Schicht des Nachrichtendatenkonvergenzprotokolls, MDCP-Schicht, des Endgeräts (100) übermittelt wird, wobei die Vielzahl von SLC SDUs die erste SLC SDU und die zweite SLC SDU umfasst; und

Segmentieren der ersten SLC SDU in die N SLC PDUs auf der SLC-Schicht durch das Endgerät (100).

6. Verfahren nach Anspruch 5, wobei das Verfahren vor dem Erlangen einer Vielzahl von SLC SDUs, die durch eine MDCP-Schicht des Endgeräts (100) übermittelt wurden, durch das Endgerät (100) auf einer SLC-Schicht ferner Folgendes umfasst:

Erlangen eines Anwendungsschichtpakets durch das Endgerät (100) auf der MDCP-Schicht, das durch eine Anwendungsschicht des Endgeräts (100) übermittelt wird;

Verwenden des Anwendungsschichtpakets als eine MDCP SDU auf der MDCP-Schicht durch das Endgerät (100) und Segmentieren der MDCP SDU in eine Vielzahl von MDCP PDUs, nachdem der MDCP SDU Fülldaten und ein Redundanzlängenanzeigefeld hinzugefügt wurden, wobei das Redundanzlängenanzeigefeld eine Datenlänge der Fülldaten anzeigt, die Vielzahl von MDCP PDUs eine erste MDCP PDU umfasst, Paket-Header-Informationen der ersten MDCP PDU ein Nachfolgeanzeigefeld umfassen und das Nachfolgeanzeigefeld eine Position der ersten MDCP PDU in der Vielzahl von MDCP PDUs anzeigt; und

Übermitteln der Vielzahl von MDCP PDUs von der MDCP-Schicht an die SLC-Schicht durch das Endgerät (100) als die Vielzahl von SLC SDUs auf der SLC-Schicht.

7. Verfahren nach Anspruch 6, wobei das Verfahren vor dem Erlangen eines Anwendungsschichtpakets, das durch eine Anwendungsschicht des Endgeräts (100) übermittelt wird, durch das Endgerät (100) auf der MDCP-Schicht ferner Folgendes umfasst:

Erlangen von Rohdaten durch das Endgerät (100);

Komprimieren der Rohdaten auf der Anwendungsschicht durch das Endgerät (100), um komprimierte Daten zu erlangen;

Verschlüsseln der komprimierten Daten auf der Anwendungsschicht durch das Endgerät (100), um verschlüsselte Daten zu erlangen; und

Hinzufügen von Paket-Header-Informationen durch das Endgerät (100) zu einem Header der verschlüsselten Daten, um das Anwendungsschichtpaket zu erlangen, wobei die Paket-Header-Informationen ein Komprimierungsanzeigefeld und ein Verschlüsselungsanzeigefeld umfassen, das Komprimierungsanzeigefeld einen beim Komprimieren der Rohdaten verwendeten Komprimierungsalgorithmus anzeigt und das Verschlüsselungsanzeigefeld einen beim Verschlüsseln der komprimierten Daten verwendeten Verschlüsselungsalgorithmus anzeigt.

8. Verfahren nach einem der Ansprüche 1 bis 7, wobei das Senden (S1101) von N SLC PDUs in einer ersten SLC SDU durch ein Endgerät (100) an eine Satellitennetzwerkvorrichtung speziell Folgendes umfasst:

Übermitteln der ersten SLC PDU aus der SLC-Schicht durch das Endgerät (100) an eine physikalische Schicht, PHY-Schicht, als einen ersten Codeblock auf der PHY-Schicht;

Hinzufügen von Prüfbitinformationen durch das Endgerät (100) zu einem Ende des ersten Codeblocks auf der PHY-Schicht und Codieren des ersten Codeblocks und der Prüfbitinformationen, um erste Codedaten zu erlangen;

Einfügen von Pilotinformationen durch das Endgerät (100) in die ersten Codedaten auf der PHY-Schicht, um erste Pilotdaten zu erlangen;

Modulieren der ersten Pilotdaten und eines Synchronisationsheaders der ersten Pilotdaten auf der PHY-Schicht durch das Endgerät (100), um erste modulierte Daten und einen ersten modulierten Synchronisationsheader zu erlangen;

Spreizen der ersten modulierten Daten und des modulierten Synchronisationsheaders auf der PHY-Schicht durch das Endgerät (100), um erste spreizmodulierte Daten zu erlangen; und

Senden der ersten spreizmodulierten Daten durch das Endgerät (100) an die Satellitennetzwerkvorrichtung auf der PHY-Schicht.

9. Verfahren nach einem der Ansprüche 1 bis 8, wobei das Verfahren ferner Folgendes umfasst:

Bestimmen eines Startzeitpunkts des ACK-Empfangszeitfensters durch das Endgerät (100) basierend auf einem Zeitpunkt, zu welchem das Endgerät (100) das Senden einer letzten SLC PDU in der ersten SLC SDU abschließt, der Dauer des Umschaltens des Endgeräts (100) von einem Übertragungszustand in einen Empfangszustand, einer Ausbreitungsverzögerung der Luftschnittstelle und einer Verzögerung der Signalverarbeitungsplanung der Satellitennetzwerkvorrichtung; und

Starten des Empfangens des ACK, das durch die Satellitennetzwerkvorrichtung gesendet wird, durch das Endgerät (100) zu dem Startzeitpunkt des ACK-Empfangszeitfensters.

10. Verfahren nach Anspruch 9, wobei eine Formel zum Bestimmen des Startzeitpunkts des ACK-Empfangszeitfensters durch das Endgerät (100) Folgendes ist:

$$tUeTxEnd + tTx2RxSwitch < tUeStartRcvAck < tUeTxEnd + 2 * tPropagate + tStationProcess,$$

wobei *tUeStartRcvAck* der Startzeitpunkt des ACK-Empfangszeitfensters ist, *tUeTxEnd* der Zeitpunkt ist, zu welchem das Endgerät (100) das Senden der letzten SLC PDU in der ersten SLC SDU abschließt, *tTx2RxSwitch* die Dauer des Umschaltens des Endgeräts (100) von dem Übertragungszustand in den Empfangszustand ist, *tPropagate* die Ausbreitungsverzögerung der Luftschnittstelle ist und *tStationProcess* die Verzögerung der Signalverarbeitungsplanung der Satellitennetzwerkvorrichtung ist.

11. Verfahren nach einem der Ansprüche 1 bis 8, wobei das Verfahren ferner Folgendes umfasst:

Bestimmen eines Endzeitpunkts des ACK-Empfangszeitfensters durch das Endgerät (100) basierend auf einer Zeitlänge eines durch das Endgerät (100) gesendeten physischen Frames, einer Ausbreitungsverzögerung der Luftschnittstelle, einer Verzögerung der Signalverarbeitungsplanung der Satellitennetzwerkvorrichtung, einer Zeitlänge eines durch die Satellitennetzwerkvorrichtung gesendeten physischen Frames und einer Zeitausrichtungsabweichung beim Senden des physischen Frames durch die Satellitennetzwerkvorrichtung; und

Anhalten des Empfangens des ACK, das durch die Satellitennetzwerkvorrichtung gesendet wird, durch das Endgerät (100) zu dem Endzeitpunkt des ACK-Empfangszeitfensters.

12. Verfahren nach Anspruch 11, wobei eine Formel zum Bestimmen des Endzeitpunkts des ACK-Empfangszeitfensters durch das Endgerät (100) Folgendes ist:

$$tUeEndRcvAck = tUeTxEnd + tUeUlFrameLen + 2 * tPropagate + tStationProcess + tStationDlFrameLen + \delta,$$

wobei *tUeEndRcvAck* der Endzeitpunkt des ACK-Empfangszeitfensters ist, *tUeUlFrameLen* die Zeitlänge des durch das Endgerät (100) gesendeten physischen Frames ist, *tPropagate* die Ausbreitungsverzögerung der Luftschnittstelle ist, *tStationProcess* die Verzögerung der Signalverarbeitungsplanung der Satellitennetzwerkvorrichtung ist, *tStationDlFrameLen* die Zeitlänge des durch die Satellitennetzwerkvorrichtung gesendeten physischen Frames ist und $\delta$ die Zeitausrichtungsabweichung beim Senden des physischen Frames durch die Satellitennetzwerkvorrichtung ist.

13. Kommunikationseinrichtung (1400; 1500), umfassend einen oder mehrere Prozessoren (1401; 1501), einen oder mehrere Speicher (1404; 1504) und einen Sende-Empfänger (1402; 1502), wobei der Sende-Empfänger(1402; 1502) und der eine oder die mehreren Speicher (1404; 1504) mit dem einen oder den mehreren Prozessoren (1401; 1501) gekoppelt sind, der eine oder die mehreren Speicher (1404; 1504) dazu konfiguriert sind, Computerprogrammcode zu speichern, der Computerprogrammcode Computeranweisungen umfasst und, wenn der eine oder die mehreren Prozessoren (1401; 1501) die Computeranweisungen ausführen, die Kommunikationseinrichtung (1400; 1500) in die Lage versetzt wird, das Verfahren nach einem der Ansprüche 1 bis 12 durchzuführen.

14. Computerlesbares Speichermedium, wobei das computerlesbare Speichermedium Anweisungen speichert und, wenn die Anweisungen auf einem Computer ausgeführt werden, der Computer in die Lage versetzt wird, das Verfahren nach einem der Ansprüche 1 bis 12 durchzuführen.

15. Chip oder Chipsystem, der/das auf ein Endgerät (100) angewendet wird und eine Verarbeitungsschaltung und eine Schnittstellenschaltung umfasst, wobei die Schnittstellenschaltung dazu konfiguriert ist, Codeanweisungen zu empfangen und die Codeanweisungen an die Verarbeitungsschaltung zu übertragen, und die Verarbeitungsschaltung dazu konfiguriert ist, die Codeanweisungen auszuführen, um das Verfahren nach einem der Ansprüche 1 bis 12 durchzuführen.

**Revendications**

1. Procédé de commande de transmission entrante dans un système de communication satellite qui prend en charge une fonction de communication par paquets courts, comprenant :

   l'envoi (S1101), par un terminal (100), de N unités de données de protocole de commande de liaison satellite SLC PDU dans une première unité de données de service de commande de liaison satellite SLC SDU vers un dispositif de réseau satellite, où N est un entier positif, les N SLC PDU comprennent une première SLC PDU, les informations d'en-tête de trame de la première SLC PDU comprennent un champ d'indicateur alterné d'unité de données de service SAI, un champ de quantité totale de trames et un champ de numéro de séquence de trame, le champ SAI indique si la première SLC PDU contient des données retransmises, le champ de quantité totale de trames indique une quantité totale N de SLC PDU comprises dans la première SLC SDU, et le champ de numéro de séquence de trame indique un numéro de séquence de trame de la première SLC PDU dans la première SLC SDU ; et
   lorsque le terminal (100) reçoit un premier caractère d'accusé de réception ACK envoyé par le dispositif de réseau satellite, la retransmission (S1104), par le terminal (100) au dispositif de réseau satellite, d'une SLC PDU qui se trouve dans la première SLC SDU et qui n'est pas reçue par le dispositif de réseau satellite, dans lequel le premier ACK indique un numéro de séquence de trame de la SLC PDU qui se trouve dans la première SLC SDU et qui n'est pas reçue par le dispositif de réseau satellite.

2. Procédé selon la revendication 1, dans lequel, après l'envoi (S1101), par un terminal (100), de N SLC PDU dans une première SLC SDU à un dispositif de réseau satellite, le procédé comprend également :
   lorsque le terminal (100) reçoit un second ACK envoyé par le dispositif de réseau satellite, l'envoi, par le terminal (100), d'une ou de plusieurs SLC PDU dans une seconde SLC SDU au dispositif de réseau satellite, dans lequel le second ACK indique que le dispositif de réseau satellite a reçu les N SLC PDU dans la première SLC SDU.

3. Procédé selon la revendication 2, dans lequel une valeur d'un champ SAI dans une SLC PDU dans la seconde SLC SDU est différente d'une valeur d'un champ SAI dans une SLC PDU dans la première SLC SDU.

4. Procédé selon la revendication 1, dans lequel, après l'envoi (S1101), par un terminal (100), de N SLC PDU dans une première SLC SDU à un dispositif de réseau satellite, le procédé comprend également :
   lorsque le terminal (100) ne reçoit pas, dans une fenêtre temporelle de réception d'ACK après que les N SLC PDU dans la première SLC SDU sont envoyées au dispositif de réseau satellite, un ACK envoyé par le dispositif de réseau satellite, la retransmission, par le terminal (100), des N SLC PDU dans la première SLC SDU au dispositif de réseau satellite.

5. Procédé selon l'une quelconque des revendications 1 à 4, dans lequel avant l'envoi (S1101), par un terminal (100), des N SLC PDU dans une première SLC SDU à un dispositif de réseau satellite, le procédé comprend également :

   l'obtention, par le terminal (100) au niveau d'une couche de commande de liaison satellite SLC, d'une pluralité de SLC SDU délivrées par une couche du protocole de convergence des données de message MDCP du terminal (100), dans lequel la pluralité de SLC SDU comprennent la première SLC SDU et la seconde SLC SDU ; et
   la segmentation, par le terminal (100), de la première SLC SDU en N SLC PDU au niveau de la couche SLC.

6. Procédé selon la revendication 5, dans lequel avant l'obtention, par le terminal (100) au niveau d'une couche SLC, d'une pluralité de SLC SDU délivrées par une couche MDCP du terminal (100), le procédé comprend également :

   l'obtention, par le terminal (100) au niveau de la couche MDCP, d'un paquet de couche application délivré par une couche application du terminal (100) ;
   l'utilisation, par le terminal (100), du paquet de couche application comme une MDCP SDU au niveau de la couche MDCP, et la segmentation de la MDCP SDU en une pluralité de MDCP PDU après l'ajout de données de remplissage et d'un champ indicateur de longueur de redondance à la MDCP SDU, dans lequel le champ indicateur de longueur de redondance indique une longueur de données des données de remplissage, la pluralité de MDCP PDU comprend une première MDCP PDU, les informations d'en-tête de paquet de la première MDCP PDU comprennent un champ indicateur de succession, et le champ indicateur de succession indique une position de la première MDCP PDU dans la pluralité de MDCP PDU ; et
   la délivrance, par le terminal (100), de la pluralité de MDCP PDU de la couche MDCP à la couche SLC en tant que pluralité de SLC SDU au niveau de la couche SLC.

**7.** Procédé selon la revendication 6, dans lequel avant l'obtention, par le terminal (100) au niveau de la couche MDCP, d'un paquet de couche application délivré par une couche application du terminal (100), le procédé comprend également :

l'obtention, par le terminal (100), de données brutes ;

la compression, par le terminal (100), des données brutes au niveau de la couche application pour obtenir des données compressées ;

le chiffrement, par le terminal (100), des données compressées au niveau de la couche application pour obtenir des données chiffrées ; et

l'ajout, par le terminal (100), d'informations d'en-tête de paquet à un en-tête des données chiffrées pour obtenir le paquet de couche application, dans lequel les informations d'en-tête de paquet comprennent un champ indicateur de compression et un champ indicateur de chiffrement, le champ indicateur de compression indique un algorithme de compression utilisé lorsque les données brutes sont compressées, et le champ indicateur de chiffrement indique un algorithme de chiffrement utilisé lorsque les données compressées sont chiffrées.

**8.** Procédé selon l'une quelconque des revendications 1 à 7, dans lequel l'envoi (S1101), par un terminal (100), des N SLC PDU dans une première SLC SDU à un dispositif de réseau satellite comprend en particulier :

la délivrance, par le terminal (100), de la première SLC PDU de la couche SLC à une couche physique PHY en tant que premier bloc de code au niveau de la couche PHY ;

l'ajout, par le terminal (100), d'informations de bits de contrôle à une queue du premier bloc de code au niveau de la couche PHY, et le codage du premier bloc de code et des informations de bits de contrôle pour obtenir des premières données de code ;

l'insertion, par le terminal (100), d'informations pilotes dans les premières données de code au niveau de la couche PHY, pour obtenir des premières données pilotes ;

la modulation, par le terminal (100), des premières données pilotes et d'un en-tête de synchronisation des premières données pilotes au niveau de la couche PHY, pour obtenir des premières données modulées et un premier en-tête de synchronisation modulé ;

l'étalage, par le terminal (100), des premières données modulées et de l'en-tête de synchronisation modulé au niveau de la couche PHY pour obtenir des premières données modulées étalées ; et

l'envoi, par le terminal (100), des premières données modulées étalées au dispositif de réseau satellite au niveau de la couche PHY.

**9.** Procédé selon l'une quelconque des revendications 1 à 8, dans lequel le procédé comprend également :

la détermination, par le terminal (100), d'un moment de début de la fenêtre temporelle de réception d'ACK sur la base d'un moment auquel le terminal (100) termine l'envoi d'une dernière SLC PDU dans la première SLC SDU, de la durée de commutation du terminal (100) d'un état de transmission à un état de réception, d'un délai de propagation d'interface radio et d'un délai de planification de traitement de signal du dispositif de réseau satellite ; et

le démarrage, par le terminal (100) au moment de début de la fenêtre temporelle de réception d'ACK, pour recevoir l'ACK envoyé par le dispositif de réseau satellite.

**10.** Procédé selon la revendication 9, dans lequel une formule permettant de déterminer, par le terminal (100), le moment de début de la fenêtre temporelle de réception d'ACK est :

$$tUeTxEnd + tTx2RxSwitch < tUeStartRcvAck < tUeTxEnd + 2 * tPropagate + tStationProcess,$$

où *tUeStartRcvAck* est le moment de début de la fenêtre temporelle de réception d'ACK, *tUeTxEnd* est le moment auquel le terminal (100) termine l'envoi de la dernière SLC PDU dans la première SLC SDU, tTx2RxSwitch est la durée de commutation du terminal (100) de l'état de transmission à l'état de réception, *tPropagate* est le délai de propagation d'interface radio et *tStationProcess* est le délai de planification de traitement de signal du dispositif de réseau satellite.

**11.** Procédé selon l'une quelconque des revendications 1 à 8, dans lequel le procédé comprend également :

la détermination, par le terminal (100), d'un moment de fin de la fenêtre temporelle de réception d'ACK sur la base d'une durée d'une trame physique envoyée par le terminal (100), d'un délai de propagation d'interface radio, d'un délai de planification de traitement de signal du dispositif de réseau satellite, d'une durée d'une trame physique envoyée par le dispositif de réseau satellite et d'un écart d'alignement temporel d'envoi de la trame physique par le dispositif de réseau satellite ; et

l'arrêt, par le terminal (100) au moment de fin de la fenêtre temporelle de réception d'ACK, de la réception de l'ACK envoyé par le dispositif de réseau satellite.

12. Procédé selon la revendication 11, dans lequel une formule permettant de déterminer, par le terminal (100), le moment de fin de la fenêtre temporelle de réception d'ACK est :

$$tUeEndRcvAck = tUeTxEnd + tUeUlFrameLen + 2 * tPropagate + tStationProcess + tStationDlFrameLen + \delta,$$

où *tUeEndRcvAck* est le moment de fin de la fenêtre temporelle de réception d'ACK, *tUeUlFrameLen* est la durée de la trame physique envoyée par le terminal (100), *tPropagate* est le délai de propagation d'interface radio, *tStationProcess* est le délai de planification de traitement de signal du dispositif de réseau satellite, *tStationDlFrameLen* est la durée de la trame physique envoyée par le dispositif de réseau satellite, et $\delta$ est l'écart d'alignement temporel de l'envoi de la trame physique par le dispositif de réseau satellite.

13. Appareil de communication (1400 ; 1500), comprenant un ou plusieurs processeurs (1401 ; 1501), une ou plusieurs mémoires (1404 ; 1504) et un émetteur-récepteur (1402 ; 1502), dans lequel l'émetteur-récepteur (1402 ; 1502) et les une ou plusieurs mémoires (1404 ; 1504) sont couplés aux un ou plusieurs processeurs (1401 ; 1501), les une ou plusieurs mémoires (1404 ; 1504) sont configurées pour stocker un code de programme informatique, le code de programme informatique comprend des instructions informatiques, et lorsque les un ou plusieurs processeurs (1401 ; 1501) exécutent les instructions informatiques, l'appareil de communication (1400 ; 1500) est activé pour mettre en œuvre le procédé selon l'une quelconque des revendications 1 à 12.

14. Support de stockage lisible par ordinateur, dans lequel le support de stockage lisible par ordinateur stocke des instructions, et lorsque les instructions sont lancées sur un ordinateur, l'ordinateur est activé pour mettre en œuvre le procédé selon l'une quelconque des revendications 1 à 12.

15. Puce ou système de puce, appliqué à un terminal (100), et comprenant un circuit de traitement et un circuit d'interface, dans lequel le circuit d'interface est configuré pour recevoir des instructions de code et transmettre les instructions de code au circuit de traitement, et le circuit de traitement est configuré pour lancer les instructions de code pour mettre en œuvre le procédé selon l'une quelconque des revendications 1 à 12.

**BeiDou communication system 10**

FIG. 1A

**BeiDou communication protocol layer**

FIG. 1B

FIG. 2

Terminal 100

Antenna 1

Antenna 2

| Mobile communication module 2G/3G/4G/5G [150] | Wireless communication module BT/WLAN/GNSS/NFC/IR/FM/satellite communication [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Processor [110]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 3

FIG. 4A

FIG. 4B

FIG. 5A

Satellite link control (SLC) layer — Message data convergence protocol (MDCP) layer — Application (APP) layer

BeiDou network device 200

EP 4 355 024 B1

FIG. 5B

FIG. 6A

FIG. 6B

SLC PDU: satellite link control layer protocol data unit
ACK: acknowledge character
tUeUlFrameLen: time length of a physical frame sent by
the terminal 100
tTx2RxSwitch: switching time from a transmitting state to
a receiving state
tRx2TxSwitch: switching time from the receiving state to
the transmitting state
tUeTxInterval: time interval at which the terminal 100
sends an SLC PDU
tStationRevWindow: remaining time length of an SLC
PDU receiving window of the BeiDou network device 200

tUeRevAckWindow: ACK receiving window of the terminal
100
tPropagate: air interface propagation delay
tStationProcess: signal processing scheduling delay of the
BeiDou network device 200
tStationDlFrameLen: time length of a physical frame sent by the
BeiDou network device 200
tUeTxEnd: moment at which the terminal 100 completes sending
a last SLC PDU in an SLC SDU
δ: sending time alignment deviation of a physical frame on the
BeiDou network device 200
tStaRevRctSP: moment at which the BeiDou network device 200
receives a latest SLC PDU

FIG. 7

FIG. 8A

CONT.
FROM
FIG. 8A

ACK-2 (1111)

tPropagate

tStationDlFrameLen

δ

tStationProcess

tStatRevwindow

tPropagate

CONT.
FROM
FIG. 8A

ACK-1 (0111)

tPropagate

tStationDlFrameLen

δ

tStationProcess

tStatRevwindow

tPropagate

BeiDou network device 200

tUeRevAckWindow: ACK receiving window of the terminal 100
tPropagate: air interface propagation delay
tStationProcess: signal processing scheduling delay of the BeiDou network device 200
tStationDlFrameLen: time length of a physical frame sent by the BeiDou network device 200
tUeTxEnd: moment at which the terminal 100 completes sending a last SLC PDU in an SLC SDU
δ: sending time alignment deviation of a physical frame on the BeiDou network device 200
SLC PDU: satellite link control layer protocol data unit
ACK: acknowledge character
tUeUlFrameLen: time length of a physical frame sent by the terminal 100
tTx2RxSwitch: switching time from a transmitting state to a receiving state
tRx2TxSwitch: switching time from the receiving state to the transmitting state
tUeTxInterval: time interval at which the terminal 100 sends an SLC PDU
tStationRevWindow: remaining time length of an SLC PDU receiving window of the BeiDou network device 200

SLC
SDU
receiving
session

FIG. 8B

SLC SDU
retransmission
session

tUeRevAckWindow

tTx2RxSwitch

SLC PDU 3

SLC PDU 2

SLC PDU 1

SLC PDU 0

SLC
SDU
sending
session

tRx2TxSwitch

TO
FIG. 9B

SLC SDU
initial
transmission
session

tUeRevAckWindow

tTx2RxSwitch

SLC PDU 3

tUeUlFrameLen    SLC PDU 2

SLC PDU 1

tUeTxInterval    SLC PDU 0

TO
FIG. 9B

Terminal 100

FIG. 9A

tUeRevAckWindow: ACK receiving window of the terminal 100

tPropagate: air interface propagation delay

tStationProcess: signal processing scheduling delay of the BeiDou network device 200

tStationDlFrameLen: time length of a physical frame sent by the BeiDou network device 200

tUeTxEnd: moment at which the terminal 100 completes sending a last SLC PDU in an SLC SDU

δ: sending time alignment deviation of a physical frame on the BeiDou network device 200

SLC SDU: satellite link control layer service data unit

SLC PDU: satellite link control layer protocol data unit

ACK: acknowledge character

tUeUlFrameLen: time length of a physical frame sent by the terminal 100

tTx2RxSwitch: switching time from a transmitting state to a receiving state

tRx2TxSwitch: switching time from the receiving state to the transmitting state

tUeTxInterval: time interval at which the terminal 100 sends an SLC PDU

tStationRevWindow: remaining time length of an SLC PDU receiving window of the BeiDou network device 200

FIG. 9B

FIG. 10A

CONT.
FROM
FIG. 10A

tPropagate

ACK-2 (1111) | tStationDlFrameLen

δ

tStationProcess

tStatRevwindow

tPropagate

SLC
SDU
receiving
session

CONT.
FROM
FIG. 10A

tPropagate

ACK-1 (0111) | tStationDlFrameLen

δ

tStationProcess

tStatRevwindow

tPropagate

BeiDou network device 200

tUeRevAckWindow: ACK receiving window of the terminal 100
tPropagate: air interface propagation delay
tStationProcess: signal processing scheduling delay of the BeiDou network device 200
tStationDlFrameLen: time length of a physical frame sent by the BeiDou network device 200
tUeTxEnd: moment at which the terminal 100 completes sending a last SLC PDU in an SLC SDU
δ: sending time alignment deviation of a physical frame on the BeiDou network device 200

SLC SDU: satellite link control layer service data unit
SLC PDU: satellite link control layer protocol data unit
ACK: acknowledge character
tUeUlFrameLen: time length of a physical frame sent by the terminal 100
tTx2RxSwitch: switching time from a transmitting state to a receiving state
tRx2TxSwitch: switching time from the receiving state to the transmitting state
tUeTxInterval: time interval at which the terminal 100 sends an SLC PDU
tStationRevWindow: remaining time length of an SLC PDU receiving window of the BeiDou network device 200

FIG. 10B

```
┌────────────────┐                              ┌────────────────┐
│  Terminal 100  │                              │ BeiDou network │
│                │                              │   device 200   │
└────────┬───────┘                              └────────┬───────┘
         │                                               │
         │    S1101: N SLC PDUs in a first SLC SDU       │
         │──────────────────────────────────────────────▶│
         │                                               │
         │                           ┌───────────────────┴──────┐
         │                           │ S1102: Receive M SLC PDUs │
         │                           │    in the first SLC SDU   │
         │                           └───────────────────┬──────┘
         │                                               │
         │  S1103: When M is less than N, send a first ACK│
         │◀──────────────────────────────────────────────│
┌────────┴────────────────────┐                          │
│ S1104: Determine, based on  │                          │
│ the first ACK, an SLC PDU   │                          │
│ that is in the first SLC SDU│                          │
│ and that is not received by the                        │
│ BeiDou network device 200   │                          │
└────────┬────────────────────┘                          │
         │                                               │
         │  S1105: Retransmit the SLC PDU that is in the  │
         │   first SLC SDU and that is not received by the│
         │            BeiDou network device               │
         │──────────────────────────────────────────────▶│
         │                                               │
```

FIG. 11

EP 4 355 024 B1

Communication apparatus 1200

Transceiver unit 1210

Processing unit 1220

FIG. 12

Communication apparatus 1300

Transceiver unit 1310

Processing unit 1320

FIG. 13

91

57

Communication apparatus 1400

Processor 1401

Instructions

Memory 1404

Instructions

Transceiver 1402

Antenna 1403

FIG. 14

Communication apparatus 1500

Processor 1501

Instructions

Memory 1504

Instructions

Transceiver 1502

Antenna 1503

FIG. 15

**EP 4 355 024 B1**

**Patent documents cited in the description**

- CN 202110877287
- CN 111211879 A

- EP 2693831 B1